(19) Europäisches Patentamt
European Patent Office
Office européen des brevets

(11) **EP 4 506 397 A1**

(12) **EUROPEAN PATENT APPLICATION**
published in accordance with Art. 153(4) EPC

(43) Date of publication:
**12.02.2025 Bulletin 2025/07**

(21) Application number: **24774604.3**

(22) Date of filing: **28.02.2024**

(51) International Patent Classification (IPC):
*C08J 5/22* (2006.01)     *C08J 9/26* (2006.01)
*C08L 23/02* (2025.01)     *C08L 23/12* (2006.01)
*C08L 23/14* (2006.01)

(52) Cooperative Patent Classification (CPC):
C08J 5/22; C08J 9/26; C08L 23/02; C08L 23/12;
C08L 23/14

(86) International application number:
**PCT/JP2024/007331**

(87) International publication number:
**WO 2024/195459 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023   JP 2023044274
20.03.2023   JP 2023044281
20.03.2023   JP 2023044295
20.03.2023   JP 2023044288**

(71) Applicant: **TOKUYAMA CORPORATION**
Yamaguchi 745-8648 (JP)

(72) Inventors:
• **SUGATA, Masami**
  Shunan-shi, Yamaguchi 745-8648 (JP)
• **MISHIMA, Yu**
  Shunan-shi, Yamaguchi 745-8648 (JP)

(74) Representative: **Viering, Jentschura & Partner mbB**
**Patent- und Rechtsanwälte**
**Am Brauhaus 8**
**01099 Dresden (DE)**

(54) **ION EXCHANGE MEMBRANE, POLYOLEFIN-BASED POROUS MEMBRANE, MEMBRANE ELECTRODE ASSEMBLY, WATER ELECTROLYSIS DEVICE, AND METHOD FOR PRODUCING POLYOLEFIN-BASED POROUS MEMBRANE**

(57)     Provided are: an ion-exchange membrane having such great tenacity as to be difficult to be damaged even when incorporated into a water electrolyzer, and low membrane resistance; a polyolefin-based porous membrane that can be used as a support for the ion-exchange membrane; and a method of producing the polyolefin-based porous membrane. The ion-exchange membrane includes a porous support, and an ion exchange resin filling pores of the porous support, and the tear resistance thereof in each of a MD direction and a TD direction is at least 3.5 N.

Fig. 1

**Description**

[Technical Field]

The present invention relates to an ion-exchange membrane, a polyolefin-based porous membrane, a membrane electrode assembly, a water electrolyzer, and a method of producing a polyolefin-based porous membrane.

[Background Art]

Porous membranes formed of thermoplastic resins are widely used as separation membranes, permselective membranes, supported membranes, and separator membranes for substances, and the like. Examples of uses of such a membrane include: separators for batteries that are used for lithium-ion secondary batteries, nickel metal hydride batteries, nickel cadmium batteries, and polymer batteries; separators for electric double layer capacitors; various filters such as reverse osmosis filtration membranes, ultrafiltration membranes, and microfiltration membranes; vapor breathable clothes; medical materials; and supports for ion-exchange membranes.

Among the foregoing uses, ion-exchange membranes having pores filled with ion exchange resins, and using porous membranes as supports can be used as membranes for polymer electrolyte fuel cells or membranes for water electrolysis.

Water electrolysis is one type of hydrogen producing methods, and is the method of electrolyzing water to generate hydrogen gas and oxygen gas. Hydrogen that is produced using, as power, energy obtained by a method that generates less carbon dioxide is called $CO_2$-free hydrogen or green hydrogen, and is expected as next-generation clean energy to replace fossil fuels.

Among water electrolysis methods, an AEM water electrolysis method using an anion exchange membrane (AEM) is not necessary to use any expensive novel metal for a catalyst therefor, and is drawing attention thereto.

In the AEM water electrolysis method, alkaline water may be used in an operating environment thereof. It has been disclosed so far to use a high chemical-resistant olefinic porous membrane or nonwoven fabric as a support for an anion exchange membrane that is used in the AEM water electrolysis method. For example, patent literature 1 discloses an anion exchange membrane using an ultrahigh molecular weight polyethylene porous membrane (such as HIPORE (trademark) manufactured by Asahi Kasei Chemicals Corporation, and SETERA (trademark) manufactured by Tonen Kagaku Nasu Kabushiki Gaisya) as a matrix. Anion exchange membranes using such supports have features such as low membrane resistance, and excellent mechanical strength which is because of the presence of the supports.

Other than polyethylene porous membranes, a polypropylene porous film by a dry method that can be suitably used as a separator for lithium-ion batteries (patent literature 2), a microporous membrane made from polypropylene by a wet method (patent literature 3), etc. were disclosed as porous membranes made from olefin.

However, since olefinic resins have a weak affinity for anion exchange resins which fill the insides thereof, tenacity tends to deteriorate when an anion exchange membrane is made, which is problematic.

For this problem, for example, patent literature 4 discloses an anion exchange membrane made of a porous membrane using silane modified polyolefin.

[Citation List]

[Patent Literature]

Patent Literature 1: JP 2009-215500 A
Patent Literature 2: JP 2010-215901 A
Patent Literature 3: WO 2016/104792
Patent Literature 4: JP 7020654 B2

[Summary of Invention]

[Technical Problem]

However, the anion exchange membrane disclosed in patent literature 4 has high membrane resistance, and deterioration in tenacity thereof in use is predicted. Membranes that function enough as anion exchange membranes, and have sufficient tenacity have been demanded.

The present invention is to solve the aforementioned problem with conventional arts, and to provide an ion-exchange membrane having such great tenacity as to be difficult to be damaged even when incorporated into a water electrolyzer, and low membrane resistance; a polyolefin-based porous membrane that can be used as a support for the ion-exchange membrane; and a method of producing the polyolefin-based porous membrane.

[Solution to Problem]

The inventors of the present invention found out that setting the tear properties of an ion-exchange membrane having a predetermined structure within a specific range can improve the tenacity thereof while reducing the membrane resistance thereof, and thereby, the life span of a water electrolyzer is improved when the water electrolyzer is equipped with the ion-exchange membrane and used repeatedly.

The inventors of the present invention also found out that setting the toughness of an ion-exchange membrane having a predetermined structure within a specific range can improve the tenacity thereof while reducing the membrane resistance thereof, and thereby, the life span of a water electrolyzer is improved when the water electrolyzer is equipped with the ion-exchange membrane and used repeatedly.

The inventors of the present invention also found out that configuring an ion-exchange membrane by using, as a support, a polyolefin porous membrane having toughness and (F40-F30) set in at least predetermined values can improve the tenacity of the ion-exchange membrane while reducing the membrane resistance thereof, and thereby, the life span of a water electrolyzer is improved when the water electrolyzer is equipped with the ion-exchange membrane and used repeatedly.

The inventors of the present invention also found out that configuring an ion-exchange membrane by using, as a support, a polyolefin-based porous membrane produced by a method including predetermined steps can improve the tenacity of the ion-exchange membrane while reducing the membrane resistance thereof, and thereby, the life span of a water electrolyzer is improved when the water electrolyzer is equipped with the ion-exchange membrane and is used repeatedly.

Since having ion exchange groups, ion exchange resins tend to swell when water is present. In contrast, ion exchange resins shrink when water is less (water is not present). Therefore, when an ion-exchange membrane is fixed with a gasket or the like, the border between a portion fixed with the gasket or the like, and a portion not so may be locally loaded due to dimensional changes caused by swelling and shrinkage of the ion-exchange membrane. An ion-exchange membrane according to the present invention which uses a polyolefin porous membrane according to the present invention as a support is difficult to break even when repeatedly swelling and being dried for a long term, and thus, is considered to contribute to improvement in life span as a water electrolyzer.

Because the aforementioned problem is more noticeable when the problem is with anion exchange membranes, the effect of an ion-exchange membrane using the polyolefin porous membrane according to the present invention as a support, the ion-exchange membrane according to the present invention, or an ion-exchange membrane using a porous membrane produced by a method according to the present invention as a support is further exerted particularly when the ion-exchange membrane is used as an anion exchange membrane in an AEM water electrolyzer.

Specifically, the present invention is provided with the following features.

[1] An ion-exchange membrane comprising:

a porous support; and
an ion exchange resin filling pores of the porous support, wherein
a tear resistance in each of a MD direction and a TD direction is at least 3.5 N.

[2] The ion-exchange membrane according to [1],
wherein the tear resistance in each of the MD direction and the TD direction is 3.5 N to 15 N.
[3] An ion-exchange membrane comprising:

a porous support; and
an ion exchange resin filling pores of the porous support, wherein
a toughness in each of a MD direction and a TD direction is at least 0.25 J.

[4] The ion-exchange membrane according to [3], wherein
the toughness in each of the MD direction and the TD direction is 0.25 J to 1.00 J.
[5] The ion-exchange membrane according to any one of [1] to [4], wherein
an elastic modulus in each of the MD direction and the TD direction is 500 MPa to 1800 MPa.
[6] The ion-exchange membrane according to any one of [1] to [5], wherein
a membrane resistance per 20 $\mu$m is at most 0.5 $\Omega \cdot cm^2$.

[7] The ion-exchange membrane according to any one of [1] to [6], wherein
a thickness is 10 $\mu$m to 200 $\mu$m.
[8] The ion-exchange membrane according to any one of [1] to [7], wherein
the ion exchange resin is a hydrocarbon polymer.
[9] The ion-exchange membrane according to any one of [1] to [8], wherein
the ion exchange resin includes an anion exchange resin.
[10] The ion-exchange membrane according to any one of [1] to [9], wherein the porous support is a porous membrane containing a polyolefin resin.
[11] The ion-exchange membrane according to [10], wherein
the polyolefin resin includes a polypropylene resin.
[12] A polyolefin-based porous membrane, wherein

a toughness in each of an MD direction and a TD direction is at least 0.35 J, and
"F40-F30" in each of the MD and TD directions is at least 2.0 MPa where F40 (MPa) is stress at 0.4 in strain and F30 is stress at 0.3 in strain on a horizontal axis of a stress-strain curve obtained by a tensile test.

[13] The polyolefin-based porous membrane according to [12], comprising:
at least 60 mass% polypropylene based on a resin composition constituting the polyolefin-based porous membrane.
[14] The polyolefin-based porous membrane according to [12] or [13], comprising:
a 5 mass% to 40 mass% olefinic elastomer based on the resin composition constituting the polyolefin-based porous membrane.
[15] The polyolefin-based porous membrane according to any one of [12] to [14], wherein
a thickness is 10 $\mu$m to 150 $\mu$m.
[16] The polyolefin-based porous membrane according to any one of [12] to [15], wherein
an air resistance for 100 cc of air per 20 $\mu$m in thickness conforming to Japan Industrial Standards P 8117:2009 is 300 seconds to 7000 seconds.
[17] The polyolefin-based porous membrane according to any one of [12] to [16], wherein
the polyolefin-based porous membrane is used as a support for an ion exchange resin.
[18] An ion-exchange membrane, comprising:

the polyolefin-based porous membrane according to any one of [12] to [17] as a support; and
an ion exchange resin filling pores of the support.

[19] A membrane electrode assembly, comprising:

the ion-exchange membrane according to any one of [1] to [11] or [18]; and
an electrode.

[20] A water electrolyzer, comprising:
the ion-exchange membrane according to any one of [1] to [11] or [18].
[21] A water electrolyzer, comprising:
the membrane electrode assembly according to [19].
[22] A method of producing a polyolefin-based porous membrane, the method comprising the following (a) to (d):

(a) melt-kneading a resin composition containing a polyolefin resin and an olefinic elastomer, and a plasticizer to obtain a gel solution, a content of the olefinic elastomer in the resin composition being at least 5 mass% and less than 50 mass% based on the resin composition;
(b) cooling the gel solution to obtain a gel sheet;
(c) subjecting the gel sheet to biaxial stretching, so that an areal stretch ratio in a MD and a TD is 10 to 35 to obtain a biaxially stretched gel film; and
(d) washing the gel film with a solvent, and drying the washed film to obtain the polyolefin-based porous membrane.

[23] The method of producing a polyolefin-based porous membrane according to [22], wherein
the polyolefin resin includes polypropylene.
[24] The method of producing a polyolefin-based porous membrane according to [22] or [23], wherein
an amount of adding the plasticizer is 40 mass% to 70 mass% based on the gel solution.
[25] The method of producing a polyolefin-based porous membrane according to any one of [22] to [24], wherein

the olefinic elastomer is a propylene-based copolymer.

[26] The method of producing a polyolefin-based porous membrane according to any one of [22] to [25], wherein a melting point of the olefinic elastomer measured by DSC (differential scanning calorimetric measurement) based on JIS K 7121(1987) is "a melting point of the polyolefin resin minus 15"°C to "the melting point of the polyolefin resin plus 5"°C.

[Advantageous Effects of Invention]

According to the ion-exchange membrane using the polyolefin porous membrane of the present invention as the support, the ion-exchange membrane of the present invention, or the ion-exchange membrane using the porous membrane produced by the method of the present invention as the support, the ion-exchange membrane superior in tenacity as low membrane resistance thereof is kept, that is, the ion-exchange membrane having such great tenacity as to be difficult to be damaged even when incorporated into a water electrolyzer can be provided. A water electrolyzer can have a longer life by using this ion-exchange membrane because the ion-exchange membrane is difficult to break even when repeatedly swelling and being dried in repeated use particularly when used in a water electrolyzer.

[Brief Description of Drawings]

[Fig. 1] is a schematic view of a water electrolyzer using an anion exchange membrane that is one embodiment of the ion-exchange membrane using the polyolefin porous membrane according to the present invention as the support, the ion-exchange membrane according to the present invention, or the ion-exchange membrane using the porous membrane produced by the method according to the present invention as the support.

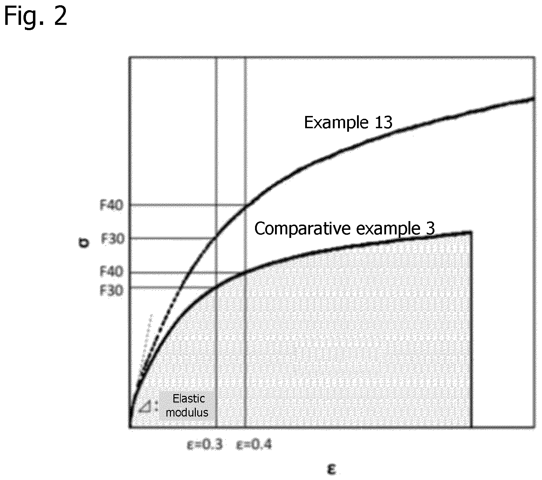

[Fig. 2] is a graph showing the stress-strain curves of the porous membranes obtained in example 13 and comparative example 3.

[Description of Embodiments]

Hereinafter embodiments of the present invention will be described in detail.

[Ion-Exchange Membrane]

The ion-exchange membrane according to the present invention includes a porous support, and an ion exchange resin filling pores of the porous support.

<Porous Support>

As the porous support that is used as a matrix of the ion-exchange membrane, the polyolefin-based porous membrane according to the present invention can be used.

(Polyolefin Resin)

The major constituent of the polyolefin-based porous membrane according to the present invention is a polyolefin resin. Examples of a polyolefin resin that constitutes the polyolefin-based porous membrane include polymers obtained by polymerizing monomers such as ethylene, propylene, 1-butene, 1-pentene, 1-hexene, 3-methyl-1-butene, 4-methyl-1-pentene, and 5-methyl-1-heptene. One of these polymers may be used alone, or at least two thereof may be used in combination. Among them, polypropylene is preferably used as the major constituent because of excellent thermostability and moldability thereof.

The foregoing polyolefin resin is referred to as the abovementioned major constituent if at least 50 mass%, more preferably at least 60 mass%, and further preferably at least 70 mass% of the polyolefin resin is contained on the basis of a resin composition (100 mass%) containing the polyolefin resin and a polyolefin-based elastomer which will be described later.

A thermal environment for AEM water electrolyzers are preferably at approximately 60°C to 80°C in operation temperature in view of improving water electrolysis performance. Therefore, when the polyolefin resin is used as the support for the ion-exchange membrane, it is preferable not to induce crystalline relaxation at that temperature because no changes in properties of the support occur after long-term use if crystalline relaxation is not induced. In such a view, the melting point of the polyolefin resin is preferably 140°C to 290°C. The lower limit is more preferably at least 145°C, more preferably at least 150°C, and further preferably at least 160°C. The higher the melting point is, the more preferable as the support for the ion-exchange membrane. In contrast, too high a melting point causes moldability to deteriorate. Therefore, the upper limit is preferably at most 280°C, more preferably at most 270°C, and further preferably at most 200°C.

Here, the melting point means a value measured by DSC (differential scanning calorimetric measurement) based on JIS K 7121(1987), and in all the following description, also means a value obtained by such measurement.

Polypropylene as the major constituent may form a copolymer with any other olefin, but is preferably a homopolymer of propylene in view of mechanical strength. Examples of a comonomer included when polypropylene forms a copolymer with any other olefin include: ethylene; and 1-butene, 1-pentene, 4-methylpentene-1, and 1-octene which are $\alpha$-olefins. The content of these comonomers in polypropylene is preferably at most 10 mass%, and more preferably at most 5 mass%.

The weight-average molecular weight of the polypropylene resin is preferably $1\times10^5$ to $5\times10^6$, more preferably $5\times10^5$ to $2.5\times10^6$, and further preferably $9\times10^5$ to $2\times10^6$. When the weight-average molecular weight is less than $1\times10^5$, entanglement between molecules cannot be sufficiently secured, and thus, breaking may be induced in membrane production, or the strength of the porous membrane may be insufficient. When the weight-average molecular weight is at least $5\times10^6$, viscosity becomes too high, and thus, uniformity in thickness may deteriorate, or moldability may deteriorate. In particular, when such a thick membrane as to be suitable as the support for the ion-exchange membrane is molded, too high a weight-average molecular weight tends to lead to an increased proved internal pressure in an extruder in melt-kneading, and thus, the size of the extruder must be increased excessively compared with the discharge amount, which leads to an increase in cost, which is not preferable. The molecular weight distribution of the polypropylene resin is preferably approximately 5 to 10. When the molecular weight distribution is within this range, workability when the polypropylene resin is melt-kneaded with a plasticizer and extruded in the undermentioned wet method for producing the porous membrane is good.

The melt flow rate (MFR) of the polypropylene resin is preferably at least 0.3 g/10min and less than 1.0 g/10min. When the MFR is within this range, workability when the polypropylene resin is melt-kneaded with a plasticizer and extruded is good as well as the molecular weight distribution.

(Olefinic Elastomer)

Preferably, the resin composition constituting the polyolefin-based porous membrane according to the present invention contains an olefinic elastomer in order to improve the tenacity as the matrix. Examples of an olefinic elastomer as used herein include ethylene-$\alpha$-olefin copolymers, propylene-$\alpha$-olefin copolymers, and 1-butene-$\alpha$-olefin copolymers. When polypropylene is used as the polyolefin resin, a propylene-$\alpha$-olefin copolymer is preferably used in view of compatibility. A propylene-$\alpha$-olefin copolymer as used herein may be not only a bipolymer such as a propylene-ethylene copolymer, but also a terpolymer such as a propylene-ethylene-butene copolymer. Monomers as used herein may be arranged in the form of random copolymer, or may be arranged in the form of block copolymer.

In the presence of a plasticizer, molecular diffusion of the polyolefin resin becomes rapid because the plasticizer plasticizes the resin, and when the polyolefin resin has high crystallinity, crystals of a coarse higher order structure may be formed. The crystals of a coarse higher order structure cause unevenness that is by portions oriented sufficiently and portions not so in the subsequent stretching step, which may result in embrittlement when the support is filled with the ion exchange resin. Through the present invention, the inventors found out that addition of a certain amount of an olefinic elastomer to the polyolefin resin not only improves the tenacity of the porous membrane, but also leads to refinement of the crystalline structure of the polyolefin resin which is used as the major constituent, and can suppress a coarse higher order structure that tends to be generated in porous membrane production by a wet method. A detailed mechanism for the above is not clear, but it is considered that: when an olefinic elastomer in an amount within a preferred range is added to the polyolefin resin, the presence of the elastomer component in molecular diffusion paths of the polyolefin resin suppresses diffusion of molecular chains of the polyolefin resin over a long distance to promote crystallization at the present site, and thereby, crystalline structures are refined.

On the basis of the resin composition (100 mass%) containing the polyolefin resin and the olefinic elastomer, the lower limit of the proportion of the olefinic elastomer is preferably at least 5 mass%, more preferably at least 10 mass%, and further preferably at least 20 mass%; and the upper limit thereof is preferably at most 50 mass%, more preferably at most 40 mass%, further preferably at most 30 mass%, and particularly preferably at most 25 mass%. When the content of the olefinic elastomer is less than 5 mass%, the effect of improving the tenacity of the matrix cannot be obtained sufficiently, and the ion-exchange membrane using the made porous membrane as the matrix may be brittle in evaluation of the mechanical properties of the ion-exchange membrane.

When the content exceeds 50 mass%, the properties as the elastomer become too dominant, and thus, pores of the porous membrane may be blocked. When the pores are blocked, the porosity is low and the air resistance is too high as the porous membrane, and thus, the ion exchange capacity when the ion-exchange membrane is eventually formed decreases, which may increase the membrane resistance. The porous membrane having tenacity and excellent toughness can be obtained by setting the content of the olefinic elastomer in any of the above preferred ranges in combination with the undermentioned membrane forming method.

Here, the melting point of the olefinic elastomer is not particularly limited, but in view of preventing pores from being blocked in membrane production, is preferably "the melting point of the polyolefin resin minus 15"°C to "the melting point of the polyolefin resin plus 5"°C with respect to the melting point of the polyolefin resin which is used as the major constituent.

(Other Additives)

Various additives may be incorporated in the resin composition if necessary. Examples of such an additive include: antioxidants such as phenolic, phosphoric, and sulfur antioxidants; nucleating agents such as aromatic phosphate ester metal salt-based, metal benzoate-based, and sorbitol-based nucleating agents; light stabilizers; and antistatic agents. Such an additive may be directly incorporated into the resin composition, or may be incorporated as a masterbatch mixed with the polyolefin resin in advance. The amount of incorporating each of additives as used herein is not particularly limited, but is usually 0.01 mass% to 5.00 mass% on the basis of the resin composition. Here, preferably, a $\beta$-crystal nucleating agent is not contained when polypropylene is used as the polyolefin resin although examples of a nucleating agent for polypropylene include $\alpha$-crystal nucleating agents and $\beta$-crystal nucleating agents. When a $\beta$-crystal nucleating agent is used, needle crystals are formed, and thus, anisotropy may be strongly shown in a higher order structure at the initial stage. Therefore, when polypropylene is used, an $\alpha$-crystal nucleating agent is preferably used as the nucleating agent.

For example, when a commercially available polypropylene resin is purchased, whether a $\beta$ crystal is incorporated therein can be determined by, for example, confirming the peak of the crystalline heat of melting by DSC. Since the $\beta$ crystal of polypropylene is lower than the $\alpha$ crystal thereof in melting point, the peak of the crystalline heat of melting derived from the $\beta$ crystal appears on a lower temperature side than the peak of the crystalline heat of melting derived from the $\alpha$ crystal. Specifically, in the case of homopolypropylene, the peak of the crystalline heat of melting derived from the $\beta$ crystal is confirmed in the range of 120°C to 150°C.

<Method of Producing Polyolefin-based Porous Membrane>

Next, the method of producing the polyolefin-based porous membrane according to the present invention will be described. The two types of the methods are known as a method of producing polyolefin-based porous membranes: a dry method (method of adding a nucleating agent, an inorganic particle, etc. to a resin to make the resin porous); and a wet method (phase separation method using a plasticizer). In the dry method, a nucleating agent and an inorganic particle are mixed with a melted resin, and thereafter, the obtained mixture is extruded via a die and cooled; thereafter, the obtained sheet is stretched under specific conditions, and thereby, circumferences of crystalline portions and the added particles are cleaved, and the resultant porous membrane is obtained. This method is also referred to as a stretching cleavage method because pores are formed by stretching.

In the wet method, first, a resin is heated, melted and blended together with a plasticizer. Next, the obtained resin solution is extruded via a die and cooled to form a gel sheet. The obtained gel sheet is subjected to at least uniaxial stretching, and thereafter, the plasticizer is removed therefrom by a solvent, and the resultant is dried; thereby, the resultant porous membrane can be obtained. In the dry method, cleavages are made around crystals to make pores, which results in coarse pores and poorer strength, whereas the dry method can lead to more economical production costs because no washing step is necessary, which is characteristic.

By the wet method, uniform micropores are obtained by phase separation from the plasticizer, and excellent planarity and strength are led, which is characteristic. Generally commercialized porous membranes made from polypropylene resins are produced by the dry method, but the porous membrane according to the present invention is preferably formed by the wet method. The method of producing the polyolefin porous membrane according to the invention includes the following steps (a) to (d):

(a) melt-kneading the resin composition containing the polyolefin resin and the olefinic elastomer, and the plasticizer to obtain a gel solution;
(b) cooling the gel solution to obtain a gel sheet;
(c) subjecting the gel sheet to biaxial stretching to obtain a biaxially stretched gel film; and (d) washing the gel film with a solvent, and drying the washed film to obtain the porous membrane.

After the step (d), if necessary, any of the steps of heat treatment, aging, corona treatment, hydrophilic treatment, etc. may be further provided.

Hereinafter each of the steps will be described in further detail.

(a) Step of Obtaining Gel Solution

As the step of obtaining a gel solution, the following method is preferably used: in a kneader, the resin composition containing the polyolefin resin and the olefinic elastomer, and if necessary, various additives are added; while they are heated and melted, a predetermined amount of the plasticizer is added thereto, and thereafter, the resultant is further kneaded, and thereby, uniformly mixed.

Here, the plasticizer is not particularly limited as long as having sufficient miscibility with the resin composition. Specific examples of the plasticizer include: aliphatic carboxylic acid esters such as methyl stearate, and butyl stearate; aromatic carboxylic acid esters such as diisononyl phthalate, and bis-2-ethylhexyl phthalate; and aliphatic hydrocarbons such as liquid paraffin. In order to obtain a stable gel sheet without any change in plasticizer content after the plasticizer is kneaded with the resin composition, preferably, the boiling point of the plasticizer is sufficiently higher than the melting point of the resin composition. The plasticizer may be a solid at room temperature if having a melting point equal to or lower than the melt-kneading temperature for the resin composition, and if being liquid in the kneading.

Examples of such a solid plasticizer include stearyl alcohol, ceryl alcohol, paraffin wax, and polyethylene oxide. Among these plasticizers, an aromatic carboxylic acid ester is preferably used because of easy pore formation in the porous membrane, and less bleed-out and easy molding in the production process. When liquid paraffin, paraffin wax, or the like is used, pores are more difficult to be formed than when an aromatic carboxylic acid ester is used, and thus, a larger amount of the addition is necessary, which may cause costs to increase. One of these plasticizers may be used alone, or a plurality thereof may be used in combination.

The amount of the addition of the plasticizer is preferably 40 mass% to 70 mass% on the basis of the gel solution (100 mass%), which is the total of the resin composition and the plasticizer. The lower limit is more preferably at least 50 mass%, and further preferably at least 55 mass%. When the amount of the addition of the plasticizer is less than 40 mass%, a sufficient quantity of pores is not formed, and thus, the ion exchange capacity of the finally obtained ion-exchange membrane decreases, which may increase the membrane resistance. The upper limit is more preferably at most 65 mass%, and further preferably at most 60 mass%. When the plasticizer exceeds 70 mass%, the viscosity is too low, which deteriorates workability in membrane production, and weakens entanglement between molecular chains, and thus, the strength of the obtained porous membrane may decline. By setting the amount of the addition of the plasticizer in any of the foregoing preferable ranges, a membrane having strength and formed porosities both enough to be used as a matrix for AEM can be obtained by the undermentioned membrane production method without causing stretchability to deteriorate in membrane production.

The method or apparatus for kneading the resin composition, the plasticizer, and if necessary, various additives is not particularly limited as long uniform melt-kneading can be performed. Each of the materials may be directly fed into an extrude. However, for uniform kneading, one may premix only solid matters of the polyolefin resin, the olefinic elastomer, and various additives by the use of a Henschel mixer or the like in advance, and thereafter, load the resultant into a kneader. As a kneader as used herein, for example, a small-scale batch kneader represented by Labo Plastomill manufactured by Toyo Seiki Seisaku-sho, Ltd. may be used, or a continuous kneader such as a twin screw extruder may be used. As a method using a twin screw extruder, for example, the method disclosed in Japanese Examined Patent Publication No. H06-104736, Japanese Patent No. 3347835, or the like can be used.

In the extruder, the resin composition, the plasticizer, and various additives that are put if necessary are mixed at a temperature at which the resin composition is completely melted. The melt-kneading temperature differs according to the used polyolefin resin, but the lower limit thereof is preferably "the melting point of the polyolefin resin plus 5°C", and further preferably "the melting point of the polyolefin resin plus 10°C". The upper limit is preferably "the melting point of the polyolefin resin plus 70°C", and more preferably "the melting point of the polyolefin resin plus 60°C". The melting point of the polyolefin resin in the present invention is approximately 160°C to 180°C, and thus, the melt-kneading temperature is preferably 165°C to 250°C.

In view of suppressing deterioration of the resin, the lower the melt-kneading temperature is, the more preferable. However, when the melt-kneading temperature is too low, an unmelted matter of the resin is generated, which may result in failure in step, such as membrane breaking, and unevenness in stretching, in the subsequent stretching step. In addition, the unmelted matter may cause the final porous membrane to have poor external appearance, and unevenness in thickness. When the melt-kneading temperature is too high, deterioration in resin may deteriorate the mechanical strength of the final porous membrane.

When a twin screw extruder is used, the ratio (L/D) of the length of the screw (D) and the diameter (L) is preferably 25 to 80, the lower limit thereof is preferably at least 30, and more preferably at least 35, and the upper limit thereof is preferably at most 70, and more preferably at most 60. When the ratio L/D is in any of the foregoing ranges, the retention time of the mixture is not too long, and each of the materials can be uniformly dispersed well while the resin is prevented from deteriorating. The rotation number (N) of the extruder is preferably 100 rpm to 400 rpm. The rotation number is preferably small because too large a rotation number may deteriorate the resin because of shearing by the screws. Too small a rotation number, however, causes unmelted matters to be generated because of malfunctions in kneading.

Therefore, appropriate adjustment is preferably made while the properties of the extruded resin are checked.

(b) Step of Obtaining Gel Sheet

In the step (b) of obtaining a gel sheet, a gel sheet can be obtained by molding the gel solution in the form of sheet, and thereafter, cooling the resultant.

This sheet formation can be performed by: press-molding a gel solution that was once cooled at room temperature at a temperature equal to or higher than the melting point of the gel solution again; or the method of feeding the gel solution from the extruder to a die, and pushing out the resultant gel solution via the die. The extruding method in this case may be a T-die method, or may be an inflation method. In view of uniform thickness, a T-die method is preferably used.

Here, the gel sheet may be a single layer film, or may have a multilayer structure including at least two layers. As a method of producing a multilayer gel sheet, the following methods are known: the method of making, and thereafter, thermally fusing separate gel sheets; and the co-extrusion method of feeding resins for layers from respective extruders to one die, and extruding the resins as uniting the resins into one. As the matrix for the ion-exchange membrane, preferably, the co-extrusion method is used in view of high bonding strength between each layer, and easy formation of pores communicating with the layers.

Any of the following known cooling methods can be used as a cooling method when the sheet is formed: the method of directly contacting cooling air, cooling water, or any other cooling medium; the method of contacting with rolls cooled by a refrigerant; and the like. Quenching at a temperature as low as possible in the cooling leads to a compact crystalline structure of the polyolefin resin, and improvement in stretchability in the subsequent steps and improvement in tenacity of the final ion-exchange membrane can be achieved. The lower the temperature in the cooling is, the more preferable. In terms of the balance with workability including prevention of dew condensation, the temperature in the cooling is preferably approximately 0°C to 25°C. It is necessary to cool until the temperatures of both the front and back faces are at most the crystallization end temperatures. Here, the crystallization end temperature means an extrapolated crystallization end temperature measured conforming to JIS K7121(1987).

The thickness of the gel sheet is not particularly limited, but is appropriately set according to the thickness of the target porous membrane. The thickness is preferably approximately 0.2 mm to 5 mm, and more preferably 0.5 mm to 3 mm.

(c) Step of Obtaining Biaxially Stretched Gel Film

Next, the obtained gel sheet is biaxially stretched. The stretching method is performed by the tentering method, the rolling method, or the combination thereof. Biaxial stretching may be simultaneous biaxial stretching, sequential biaxial stretching, or the combination thereof. The stretching may be single stage stretching, or may be multistage stretching. If the stretching is uniaxial stretching only, molecular chains are excessively oriented in one direction, which may cause marked embrittlement in an unstretched direction when the ion-exchange membrane is made using the obtained porous membrane as the matrix. Therefore, biaxial stretching is necessary to be performed. The tenter stretching may be performed by batching.

In the stretching step, the lower limit of the areal stretch ratio that includes the longitudinal and transverse ratios (longitudinal ratio $\times$ transverse ratio) is preferably at least 10, more preferably at least 12, and further preferably at least 16. When the lower limit is within any of the above preferred ranges, the mechanical strength can be improved by sufficiently refining the crystalline structure at the initial stage which is generated in the gel sheet. When the lower limit is less than 10, embrittlement is easily induced starting from a higher order structure of crystals which are not refined but remain when the ion-exchange membrane is made using the obtained porous membrane as the matrix. In addition, the structure is not sufficiently fractionated, and thus, the pore diameters are coarse, and the gas barrier properties when the ion-exchange membrane is made may be inferior. The upper limit of the areal stretch ratio is preferably at most 40, more preferably at most 35, further preferably at most 30, and particularly preferably less than 25. The higher the areal stretch ratio is, the greater the strength of the porous membrane is, but the more excessively the orientation progresses, and the weaker entanglement between molecular chains is, and thus, the extension when the ion-exchange membrane is made is reduced, which may result in deteriorated toughness. Whether the area ratio is sufficient or not can be determined by the undermentioned value of "F40-F30".

The stretching temperature is preferably at most the melting point of the polyolefin resin which is the major constituent, and more preferably in the range of "the crystalline dispersion temperature Tcd of the polyolefin resin" and "the melting point of the polyolefin resin minus 5°C" when the crystalline dispersion temperature of the polyolefin resin is defined as Tcd. When the stretching temperature is at most "the melting point of the polyolefin resin minus 5°C", the resin can be prevented from fusing with clips which the sheet is grasped with, and stretching rolls in the stretching. Here, the crystalline dispersion temperature Tcd of the polyolefin resin can be measured from temperature characteristics of dynamic viscoelasticity measured conforming to ASTM D4065 by the use of a sheet obtained by subjecting the resin composition to melt pressing at the melting point plus 50°C, and thereafter, ice-cooling the resultant at 0°C.

Specifically, since the polypropylene resin in the present invention has a crystalline dispersion temperature of 110°C to 130°C, and a melting point of 160°C to 180°C, the stretching temperature is preferably 110°C to 175°C, more preferably higher than 115°C and lower than 160°C, and further preferably 120°C to 155°C. When sequential stretching or multistage stretching is carried out, the stretching temperature in each stage may be either the same or different.

Here, in the present invention, it is important to perform the stretching in a state where the plasticizer is contained in the gel sheet. Performing the stretching before the plasticizer is removed enables the crystalline structure to uniformly fracture, and can improve the toughness of the porous membrane. Uniformly fracturing the crystalline structure leads to formation of uniform and compact porosities, and thus, embrittlement caused by roughness and fineness of the ion exchange resin is difficult to be caused.

(d) Step of Washing and Drying Gel Film to Obtain Porous Membrane

Next, the gel film obtained in the step (c) is washed with a solvent, and the plasticizer is extracted. A solvent, as used herein, with which the plasticizer is extracted is not particularly limited as long as being a poor solvent for the resin composition, and being a good solvent for the plasticizer. Examples of such a solvent include: hydrocarbons such as n-hexane, and cyclohexane; fluorocarbons each obtained by substituting part or all of hydrogen in a hydrocarbon with fluorine; alcohols such as ethanol, and isopropanol; and ketones such as acetone, and 2-butanone. A known method such as the method of immersing the gel film in the solvent, the showering method, and the combination thereof can be used as the washing method. The washing solvent after the washing can be removed by air-drying, drying by heating, or the like. In view of suppressing blocking of pores by heating, and suppressing destruction of the pore structure by rapidly volatilizing the washing solvent, the drying is preferably performed at a low temperature lower than 50°C.

After the plasticizer is removed, heat treatment may be carried out in order to stabilize the porous membrane. Heat treatment stabilizes the crystalline structure, and relaxes residual strain, and thus, the dimensions, and the crystalline structure in the membrane can be stabilized. The higher the temperature of the heat treatment is, the more the time for the stabilization can be shortened. Meanwhile, a high temperature in the heat treatment may cause pores to be blocked by sudden shrinkage, and melting of the crystals. Thus, this temperature may be appropriately adjusted according to the target porosity.

<Properties of Polyolefin-Based Porous Membrane>

The polyolefin-based porous membrane according to the present invention has good mechanical properties, and thus, an excellent ion-exchange membrane exerting an excellent effect of suppressing embrittlement, and having great tenacity can be obtained when the polyolefin-based porous membrane is used as the support for the ion-exchange membrane. Hereinafter properties of the polyolefin-based porous membrane according to the present invention will be described. The measurement method of each of the properties will be described in detail in the examples.

(1) Thickness

The thickness of the polyolefin-based porous membrane according to the present invention is not particularly limited. In order to show suitable performance as the support for the ion-exchange membrane, this thickness is preferably 10 $\mu$m to 150 $\mu$m. In view of realizing a low membrane resistance when the ion-exchange membrane is made, the thinner the thickness is, the more preferable. In contrast, a thin thickness deteriorates gas barrier properties and mechanical strength. Particularly, in AEM water electrolysis using an anion exchange membrane, high pressure is applied to the membrane. Therefore, the polyolefin-based porous membrane preferably has some thickness in view of mechanical strength and gas barrier properties. Therefore, the thickness of the porous membrane is more preferably 15 $\mu$m to 120 $\mu$m, and further preferably 25 $\mu$m to 100 $\mu$m.

(2) Porosity

The porosity of the polyolefin-based porous membrane according to the present invention is preferably at least 10% and lower than 50%. The lower limit of the porosity is more preferably at least 15%, further preferably at least 20%, and particularly preferably at least 30%. When the porosity is lower than 10%, the filling ion exchange resin is less when the polyolefin-based porous membrane is used as the support for the ion-exchange membrane, and thus, the ionic conductivity deteriorates, and the membrane resistance may be high. When the porosity exceeds 50%, expansion of the ion exchange resin by water absorption in a wet state cannot be suppressed when the ion-exchange membrane is made, which may cause the shape of the ion-exchange membrane not to be retained. The upper limit of the porosity is more preferably at most 45%.

(3) Air Resistance

The air resistance of the polyolefin-based porous membrane according to the present invention per 20 $\mu$m is preferably 300 s/100ccAir to 7000 s/100ccAir. The lower limit of the air resistance per 20 $\mu$m is preferably at least 400 s/100ccAir, and more preferably 500 s/100ccAir. When the air resistance per 20 $\mu$m is lower than 300 s/100ccAir, the gas barrier properties may be inferior when the polyolefin-based porous membrane is used as the support for the ion-exchange membrane. The upper limit of the air resistance of the polyolefin-based porous membrane per 20 $\mu$m is preferably at most 5000 s/100ccAir, more preferably at most 2500 s/100ccAir, and further preferably at most 1350 s/100ccAir. Too high an air resistance leads to late impregnation with the ion exchange resin when the polyolefin-based porous membrane is used as the support for the ion-exchange resin, and the productivity may deteriorate. In addition, the membrane resistance of the obtained ion-exchange membrane becomes high.

(4) Elastic Modulus

The lower limit of the modulus of elasticity in tension of the polyolefin-based porous membrane according to the present invention in each of an MD direction (longitudinal direction of the surface of the membrane, or machine direction) and a TD direction (direction vertical to the MD direction, or width direction of the surface of the membrane) is preferably at least 200 MPa, more preferably at least 300 MPa, and further preferably at least 400 MPa. The higher the elastic modulus is, the more preferable. When an olefinic elastomer is added as the present invention, the elastic modulus tends to lower, and thus, the substantial upper limit is approximately 1500 MPa. Excessive orientation for increasing the elastic modulus causes extension to deteriorate, which may result in deteriorated toughness. Therefore, the upper limit of the elastic modulus is preferably at most 1200 MPa, and more preferably at most 1000 MPa. When the elastic modulus is within any of the preferable ranges, the polyolefin-based porous membrane is difficult to be wrinkled, and is excellent in handleability when used as the support for the ion-exchange membrane. The elastic modulus of the finally obtained ion-exchange membrane can be also improved when the polyolefin-based porous membrane is used as the support for the ion-exchange membrane.

The ratio of the elastic modulus in the MD direction and the elastic modulus in the TD direction (MD elastic modulus/TD elastic modulus) is preferably 0.5 to 1.5. When the ratio of the elastic modulus is outside this range, anisotropy is high, and thus, anisotropy affects dimensional changes when the ion-exchange membrane swells when the polyolefin-based porous membrane is used as the support for the ion-exchange membrane. Therefore, the ion-exchange membrane is wrinkled by the difference between the dimensional changes when incorporated into a water electrolyzer and used, which may lead to malfunctions.

(5) Toughness (J)

The toughness of the polyolefin-based porous membrane according to the present invention in each of the MD direction and the TD direction is preferably at least 0.35 J. Here, "toughness" is one parameter showing the toughness of a material, and is the amount of energy necessary for a material to fracture when the material is tensed. Specifically, as described in L. E. Nielsen, Mechanical Properties of Polymers, Japanese translation by Onogi, Shigeharu, 98-100, Kagaku-Dojin Publishing Company, Inc., 1965, the toughness can be calculated from an area formed by a stress-strain curve obtained by a tensile test.

When the toughness of the polyolefin-based porous membrane is at least 0.35 J, an excellent embrittlement suppressing effect is exerted when the polyolefin-based porous membrane is used as the support for the ion-exchange membrane, and a sturdy ion-exchange membrane that is difficult to break can be obtained. The lower limit of the toughness is more preferably at least 0.40 J. The more the toughness is, the more preferable, whereas the substantial upper limit is approximately 1.5 J.

(6) F30 (Stress at 30% Strain) and F40 (Stress at 40% Strain)

"F40-F30" of the polyolefin-based porous membrane according to the present invention in each of the MD and TD directions is preferably at least 2.0 MPa. When the polyolefin-based porous membrane is used as the support for the ion-exchange membrane, preferably, the crystalline structure in the porous membrane is fully fractionated, and oriented. Insufficient refinement and/or orientation of the structure may lead to marked embrittlement in filling with the ion exchange resin even if good mechanical properties as a porous membrane are displayed. "F40-F30" is used as a parameter for grasping these refinement and orientation.

When a film is stretched at a certain speed, stress changes according to internal structural changes. The stress lineally increases for strain in a low strain region that is lower than 10%, but thereafter, the increase in stress becomes gentler. Here, when there is a coarse structure without orientation inside the porous membrane, stress is released in the process of fracturing the internal structure, and orienting when deformation is given, and thus, the increase in stress for strain becomes further small. Therefore, by evaluating the value of "F40-F30", the degree of the orientation can be evaluated.

The inventors of the present invention found that when the value of "F40-F30" is less than 2.0 MPa, the polyolefin-based porous membrane tends to easily embrittle when used as the support for the ion-exchange membrane even with sufficient toughness as a porous membrane. The lower limit of "F40-F30" is preferably at least 2.0 MPa, more preferably at least 2.5 MPa, and further preferably at least 3.0 MPa.

A larger "F40-F30" shows that more orientation is given. Therefore, the upper limit of "F40-F30" is preferably at most 10.0 MPa, more preferably at most 9.0 MPa, and further preferably at most 8.0 MPa. When "F40-F30" exceeds 10.0 MPa, orientation is given so much that the toughness deteriorates, which may result in easy embrittlement when the ion-exchange membrane is made.

The polyolefin-based porous membrane according to the present invention is preferably provided with the foregoing characteristics derived from "F40-F30" in both the MD direction and the TD direction.

[Method of Producing Ion-Exchange Membrane Using Polyolefin-based Porous Membrane as Support]

The porous membrane according to the present invention which is obtained by the aforementioned method can be suitably used as the support for the ion exchange resin. An ion exchange resin (type of an ion exchange group) to be supported may be appropriately determined according to the target use. The ion exchange resin may be either an anion exchange resin or a cation exchange resin. Among them, it is preferable to use the porous membrane as the support for an anion exchange resin because the ion exchange resin can be used for anion exchange membrane (AEM) water electrolysis which is water electrolysis for producing hydrogen.

When the ion exchange resin is supported, preferably, the support is preferably a single layer of one sheet but is not superimposed on itself. When at least two sheets of the support are layered, the layered interfaces may peel off. In addition, thermal compression or the like for sufficiently adhering the layered interfaces may cause pores to be crushed to increase the membrane resistance. The method of supporting the ion exchange resin is not particularly limited, but examples thereof include the following four methods.

(1) A polymerizable composition containing an ion exchange group-containing monomer (if necessary, a solution of this polymerizable composition), and the porous membrane are brought into contact with each other to fill the pores of the porous membrane with the polymerizable composition. After this, the polymerizable composition filling the pores are polymerized. At this time, in order to obtain the target ion-exchange membrane, the used polymerizable composition may be formed of the ion exchange group-containing monomer only, or may contain the ion exchange group-containing monomer, and any other monomers incorporated if necessary. The other monomers may include a polyfunctional crosslinking agent such as divinylbenzene.

(2) A polymerizable composition containing a monomer to which an ion exchange group can be introduced (if necessary, a solution of this polymerizable composition), and the porous membrane are brought into contact with each other to fill the pores of the porous membrane with the polymerizable composition. Next, this polymerizable composition is polymerized. After this, an ion exchange group is introduced to the obtained precursor polymer constituted of the polymerized monomers to which an ion exchange group can be introduced.

More detailed description is as follows. First, a polymerizable composition containing a polymerizable monomer having a halogenoalkyl group (such as chloromethylstyrene, bromomethylstyrene, and iodomethylstyrene), and if necessary, a crosslinking polymerizable monomer (such as a divinylbenzene compound) and a polymerization initiator (such as an organic peroxide) of an effective amount are brought into contact with the polyolefin-based porous membrane. Then, after the pore portions of the porous membrane are filled with the polymerizable composition, curing polymerization is performed to prepare a precursor of the ion-exchange membrane with which a resin having a halogenoalkyl group is filled. Next, the halogenoalkyl group is converted to an ion exchange group to form the ion-exchange membrane.

In this method, a polymerizable monomer having a halogenoalkyl group is shown as an example. For example, one may prepare a precursor of the precursor to which any halogenoalkyl group has not been introduced yet by using styrene or the like, and introduce a halogenoalkyl group into the prepared precursor of the precursor. After the halogenoalkyl group is introduced, the same operation as described above may be performed.

(3) A polymerizable composition containing an ion exchange group-containing monomer is polymerized. A solution containing the obtained ion exchange group-containing polymer, and the polyolefin-based porous membrane are brought into contact with each other to, thereby, form the ion-exchange membrane with an ion exchange resin (this polymer) filling at least pores thereof. Another monomer containing a crosslinking agent may be also incorporated into the polymerizable composition, but care must be taken because too high a degree of cross-linkage tends to lead to lowered solubility of the ion exchange group-containing polymer.

(4) A polymerizable composition containing a monomer to which an ion exchange group can be introduce is polymerized. A solution of the obtained polymer, and the porous membrane are brought into contact with each other to fill the pores of the porous membrane with the polymer (precursor polymer constituted of the polymerized monomers to which an ion exchange group can be introduced). After this, an ion exchange group is introduced to the precursor polymer constituted of the polymerized monomers to which an ion exchange group can be introduced. In this method as well, another monomer containing a crosslinking agent may be also incorporated into the polymerizable composition, but care must be taken because too high a degree of cross-linkage tends to lead to lowered solubility of the precursor polymer.

Among the above methods, in view of productivity, the amount of introducing an ion exchange group, insolubility of the ion exchange resin, etc., the method (1) or (2) may be preferably used. That is, preferably, the method of once impregnating the porous membrane with a monomer composition of a polymerizable monomer, and thereafter, performing polymerization, and if necessary, introducing an ion exchange group is used.

This ion exchange resin is not particularly limited, but in view of adaptability and adhesiveness to the porous membrane, etc., the resin portion excluding the ion exchange group is preferably formed of a cross-linked hydrocarbon polymer. Here, a hydrocarbon polymer means a polymer having substantially no carbon-fluorine bond: most bonds of the main and side chains constituting this polymer are formed by carbon-carbon bonds. Between the carbon-carbon bonds of this hydrocarbon polymer, a small amount of other atoms such as oxygen, nitrogen, silicon, sulfur, boron, and phosphorus may be included in the form of ether bond, ester bond, amide bond, siloxane bond, etc. The atoms bonded to the main and side chains are not necessary to be all hydrogen atoms, but may be substituted with other atoms such as chlorine, bromine, fluorine, and iodine, or substituents including the other atoms as long the amount of the substitution is small. Preferably, these elements other than carbon and hydrogen is in an amount of at most 40 mol%, and suitably at most 10 mol% of the total elements constituting the resin excluding the ion exchange group (polymer).

An anion exchange group in an anion exchange membrane (AEM) (anion exchange group of an anion exchange resin that fills the pores of the porous membrane) is not particularly limited, but in view of easy production, easy availability, etc., is preferably a quaternary ammonium base or a pyridinium base.

When anion exchange membranes are produced by any of the above production methods, a counter ion of an anion exchange group is often obtained as a halide ion. **In** this case, preferably, an anion exchange membrane including such a halide ion as a counter ion is subjected to ion-exchange by, for example, immersion thereof in alkaline water of an excessive amount to be of an OH- type. The ion exchanging method here is not particularly limited, but may be carried out based on a known method. For example, an anion-exchange type electrolyte membrane having the foregoing halide ion as a counter ion is immersed in an aqueous solution of sodium hydroxide or potassium hydroxide for 2 to 10 hours.

A cation exchange group in a cation exchange membrane (cation exchange group of a cation exchange resin which fills the pores of the porous membrane) is not particularly limited, but in view of easy production, easy availability, etc., is preferably of a sulfonic acid type or a carboxylic acid type.

[Properties of Ion-Exchange Membrane]

The ion-exchange membrane according to the present invention uses the polyolefin-based porous membrane having good toughness and high "F40-F30" as the support; thus, is difficult to be damaged even in long-term use particularly when incorporated into a water electrolyzer, and contributes to a long life of the water electrolyzer. Hereinafter the properties of the ion-exchange membrane according to the present invention will be described.

(1) Ion Exchange Capacity (meq./g)

The ion exchange capacity of the ion-exchange membrane according to the present invention is not particularly limited. In order to show suitable performance as the ion-exchange membrane, this ion exchange capacity is preferably at least 1.0 meq./g, more preferably 1.2 meq./g, and further preferably 1.4 meq./g. The larger the ion exchange capacity is, the better the ionic conductivity is. Thus, a higher ion exchange capacity is more preferable. In contrast, due to risks of too high a swelling rate in hydration causing gelation, marked deterioration in strength, etc., the upper limit is preferably at most 6.0 meq./g for balancing the ionic conductivity on the strength.

(2) Membrane Resistance ($\Omega \cdot cm^2$)

The membrane resistance of the ion-exchange membrane according to the present invention is not particularly limited. In order to show suitable performance as the ion-exchange membrane, the membrane resistance per 20 $\mu$m is preferably at most 0.5 $\Omega \cdot cm^2$. When the membrane resistance per 20 $\mu$m is at most 0.5 $\Omega \cdot cm^2$, a hydrogen producing apparatus or the like can be operated at a low voltage when, for example, the ion-exchange membrane is incorporated in the apparatus or the like, and thus, is superior in energy consumption.

(3) Tear Resistance (N)

The tear resistance (N) of the ion-exchange membrane according to the present invention in each of the MD direction and the TD direction is preferably at least 3.5 N. The lower limit of the tear resistance is more preferably at least 4.0 N, and further preferably at least 5.0 N. A higher tear resistance shows more difficulty in tearing of the ion-exchange membrane. The ion-exchange membrane according to the present invention has high tear resistance, and thus, is difficult to tear even if scratched when, for example, incorporated into a water electrolyzer. In water electrolyzers, stress due to swelling and shrinkage of films concentrates on the borders between fixed portions and unfixed portions when ion-exchange membranes are fixed to cells by gaskets or the like, and the boarder portions may break in long-term use. Since having high tear resistance, the ion-exchange membrane according to the present invention is difficult to break even in long-term use, and is excellent in life span. The higher the tear resistance is, the more preferable, whereas the substantial upper limit of the tear resistance is approximately 15 N.

(4) Toughness (J)

The toughness of the ion-exchange membrane according to the present invention in each of the MD direction and the TD direction is preferably at least 0.25 J. As described above, "toughness" is a parameter showing the toughness of a material. The ion-exchange membrane according to the present invention is sturdy as a material, is difficult to break in handling, and is excellent in handleability since having good toughness. In addition, since being sturdy, the ion-exchange membrane according to the present invention is difficult to break, and is excellent in life span as described concerning the tear resistance. The lower limit of the toughness is more preferably at least 0.30 J. The more the toughness is, the more preferable, whereas the substantial upper limit is at most 1.00 J.

(5) Elastic Modulus (MPa)

The elastic modulus of the ion-exchange membrane according to the present invention in each of the MD direction and the TD direction is not particularly limited, but is preferably at least 500 MPa. The lower limit of this elastic modulus is more preferably at least 600 MPa, and further preferably at least 1000 MPa. A high elastic modulus leads to less wrinkles, and excellent handleability when, for example, the obtained ion-exchange membrane is conveyed in the next step. The higher the elastic modulus is, the more preferable, whereas the substantial upper limit is at most 1800 MPa.

(6) Thickness

The thickness of the ion-exchange membrane according to the present invention is not particularly limited. In order to show suitable performance as the ion-exchange membrane, this thickness is preferably 10 $\mu$m to 200 $\mu$m. In view of realizing a low membrane resistance of the ion-exchange membrane, the thinner the thickness is, the more preferable. In contrast, a thin thickness deteriorates gas barrier properties and mechanical strength. Particularly, in AEM water electrolysis using an anion exchange membrane, high pressure is applied to the membrane. Therefore, the ion-exchange membrane preferably has some thickness in view of handleability and gas barrier properties. Therefore, the thickness of the ion-exchange membrane is more preferably 15 $\mu$m to 170 $\mu$m, and further preferably 25 $\mu$m to 150 $\mu$m.

[Method of Producing Membrane Electrode Assembly Using Ion-Exchange Membrane]

A membrane electrode assembly (MEA) can be produced using the ion-exchange membrane according to the present invention. The MEA is a composite membrane formed of an ion-exchange membrane and an electrode that are united into one body. Here, the united electrode may include a first electrode that is a cathode, and a second electrode that is an anode. Further, a catalyst electrode layer only may be included, or a gas diffusion layer may be also included. The ion-exchange membrane may be intervened between the first electrode and the second electrode of the membrane electrode assembly.

The electrode may contain a metallic catalyst, and optionally, an ion conductive agent, a conducting agent, and a binder. The proportions of the metallic catalyst, the ion conductive agent, the conducting agent, and the binder in the electrode may be each appropriately adjusted according to the materials to be used.

The metallic catalyst promotes oxidation or reduction reaction. The metallic catalyst is typically in the form of particle. As the metallic catalyst, for example, platinum, gold, silver, palladium, iridium, rhodium, ruthenium, tin, iron, cobalt, nickel, manganese, molybdenum, tungsten, vanadium, chromium, tantalum, zirconium, aluminum, zinc, an oxide or a hydroxide thereof, or an alloy thereof can be used. The metallic catalyst preferably contains nickel when used for the anode, and preferably contains platinum, gold, silver, palladium, iridium, rhodium, ruthenium, tin, iron, cobalt, nickel, manganese, or an alloy thereof when used for the cathode.

The ion conductive agent improves ionic conductivity of the electrode. Examples of the ion conductive agent include perfluorocarbon polymers, aromatic polyether ether ketone, and polysulfone which have acidic functional groups. As the ion conductive agent, an ion exchange resin may be used.

The conducting agent improves the electron conductivity of the electrode. The conducting agent may be used as a carrier of the metallic catalyst. As the conducting agent, for example, carbon black, activated carbon, graphite, fullerene, a carbon nanotube, or a mixture thereof can be used.

The binder improves the rigidity of the electrode. As the binder, polytetrafluoroethylene (PTFE), polyvinylidene fluoride (PVDF), a fluorine rubber, a polyacrylic acid compound, an imide compound, or a mixture thereof can be used.

The method of producing the membrane electrode assembly is not particularly limited, but a known method may be used. An example is the following method.

First, the ion-exchange membrane is prepared. The ion-exchange membrane may be in a wet state, but is preferably in a dry state.

Next, a composition for forming the first electrode, and a composition for forming the second electrode are each prepared by mixing the metallic catalyst, and optionally, the ion conductive agent, the conducting agent, the binder, and an organic solvent. These compositions for forming the electrodes are applied onto, for example, release paper, and the resultant coating is obtained. This coating is dried. The dried coating is released from the release paper, and is layered on one and the other main faces of the ion-exchange membrane. The ion conductive agent may be applied onto both the main faces of the ion-exchange membrane in advance. Alternatively, one may directly apply the composition for forming the first electrode and/or the composition for forming the second electrode onto the respective main faces of the ion-exchange membrane to form coatings.

A first coating, a second coating, and the ion-exchange membrane are united into one body by subjecting the obtained layered body to heating, pressing, or both thereof. **In** such a manner, the membrane electrode assembly including the first electrode, the ion-exchange membrane, and the second electrode which are stacked in this order is obtained. Either the first electrode or the second electrode may be omitted. The electrode may be provided on only one side of the ion-exchange membrane.

[Water Electrolyzer Provided with Ion-Exchange Membrane or MEA, and Method of Producing such Water Electrolyzer]

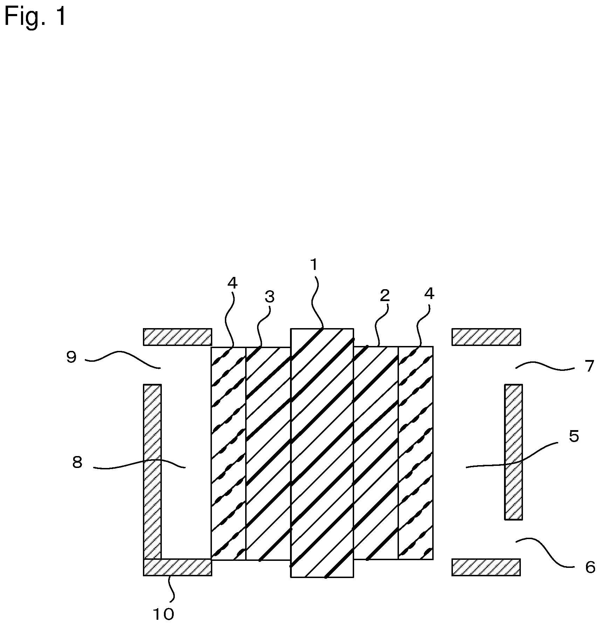

A water electrolyzer can be formed by using the aforementioned ion-exchange membrane or membrane electrode assembly (MEA) according to the present invention. Among them, when the ion-exchange membrane is used as an anion exchange membrane (AEM), the ion-exchange membrane or MEA can be used as a membrane or a membrane electrode assembly for water electrolysis by which hydrogen can be produced. The structure of a water electrolyzer here is as shown in Fig. 1. The water electrolyzer may be a water electrolyzer using water or alkaline water at a low concentration, or may be an apparatus using alkaline water at a high concentration of at least 5 mass%.

Specifically, catalyst layers (an anode 2 and a cathode 3) each formed by dispersing a catalyst through an anion exchange resin are disposed on an anion exchange membrane 1, and respective gas diffusion layers 4 are provided on these catalyst layers. The structure of the gas diffusion layers 4 is not particularly limited, but for example, a porous material made from a graphite fiber which is generally used in AEM water electrolyzers can be used for the gas diffusion layers 4.

Here, the aforementioned MEA may be used instead of the anion exchange membrane 1, the anode 2, and the cathode 3. A water feeding port 6 via which water is fed, and an oxygen discharge port 7 via which oxygen is discharged are provided at an anode chamber 5 on the anode 2 side in a metallic housing 10. Further, a hydrogen discharge port 9 via which hydrogen is discharged is provided at a cathode chamber 8 on the cathode 3 side.

The foregoing structure allows hydrogen to be produced by water electrolysis.

In a water electrolytic cell as described above, the anion exchange membrane functions as a solid electrolyte membrane that transmits ions between the anode and the cathode. The anion exchange membrane further plays a role in suppressing mixing of oxygen gas that is generated at the anode, and hydrogen gas that is generated at the cathode.

[Examples]

Hereinafter the present invention will be described in detail with reference to examples, but is not limited to these examples.

The properties of the porous membranes used in the examples and the comparative examples in the present invention, and the properties of the ion-exchange membranes using these porous membranes were each evaluated by the following methods. The measurement was carried out at normal temperature 25°C unless otherwise specified about the temperature.

<Weight-Average Molecular Weight and Molecular Weight Distribution>

The weight-average molecular weights (Mw) and the number average molecular weights (Mn) of the polyolefin resin and the olefinic elastomer were obtained by gel permeation chromatography (GPC) under the following conditions. The respective molecular weights were relative values on the basis of standard polystyrene, and standard dibenzyl. From the values of Mw and Mn, the molecular weight distribution were calculated as Mw/Mn.

Apparatus: high temperature GPC apparatus (HLC-8321GPC/HT manufactured by Tosoh Corporation)
Detector: differential refractive index detector RI
Column: Shodex HT-G, Shodex HT-806M (manufactured by Showa Denko K. K.)
Solvent: 1,2,4-trichlorobenzene
Flow rate: 1.0 mL/min
Column temperature: 145°C
Injection volume: 0.200 mL
Standard sample: mono-dispersed polystyrene manufactured by Tosoh Corporation, dibenzyl manufactured by Tokyo Chemical Industry Co., Ltd.

<MFR and Melting Point>

The MFRs of the polyolefin resin and the olefinic elastomer were measured based on JIS K 7210-1:2014. The melting points of the polyolefin resin and the olefinic elastomer were measured by DSC based on JIS K 7121(1987).

<Thickness ($\mu$m)>

The porous membrane was cut to be 120 mm×120 mm in size. The thickness of the resultant membrane was measured at nine points in total by using a contact thickness gauge (Digimatic Indicator ID-H0530 manufactured by Mitutoyo Corporation): the nine points were at 30 mm intervals in width and length directions. This thickness was defined as the thickness of the membrane.

<Porosity (%)>

The volume V (cm$^3$) and mass M (g) of the porous membrane were measured, and the porosity P was calculated using the following equation. In the equation, $\rho$ is the density (g/cm$^3$) of the resin composition forming the porous membrane.

$$P=100\times(1-M/(\rho\times V))$$

Here, the density of crystalline polyolefin changes according to the difference in degree of crystallinity due to the difference in molding. Therefore, as the density of the resin composition, the density of a sheet that was obtained in the following manner was used: the resin composition was melted at the melting point plus 50°C, and pressed with a compression molding machine until the thickness thereof was approximately 0.1 mm, and was quenched with water with ice of 0°C.

<Air Resistance (sec/100ccAir)>

The air resistance of the porous membrane was measured using Oken type Air-permeability Tester (EGO1-7-1MR) manufactured by Asahi Seiko Co., Ltd. based on JIS P8117:2009. The obtained air resistance was divided by the membrane thickness ($\mu$m), and thereafter, multiplied by 20; thereby, the air resistance per 20 $\mu$m was calculated.

<Tensile Properties>

A tensile test was performed using Autograph AGS-X manufactured by Shimadzu Corporation under the following conditions:

Test speed: 5 mm/min

Dimensions of a test specimen: a rectangle of 10 mm in width and 50 mm in length

Gripping distance (initial length) $L_0$: 30 mm

Thickness: the thickness of each test specimen was measured at central three points by using a contact thickness gauge (Digimatic Indicator ID-H0530 manufactured by Mitutoyo Corporation). The average value of the results was defined as the thickness of the test specimen.

From the obtained test force F (N) and gripping displacement ΔL, stress σ and strain ε were calculated based on the following equation. A stress-strain curve was obtained by plotting the obtained stress σ on the vertical axis, and the obtained strain ε on the horizontal axis. From this stress-strain curve, the following tensile properties (1) to (4) were obtained. Each of the values were measured with respect to both the MD direction and the TD direction.

$$\sigma \text{ (MPa)} = F \text{ (N)}/S \text{ (mm}^2)$$

$$\varepsilon = \Delta L \text{ (mm)}/L_0 \text{ (mm)}$$

Here, when the ion-exchange membrane was evaluated, a chloride ion-type dry membrane obtained by immersing the ion-exchange membrane in 0.5 mol/L NaCl aqueous solution for at least 10 hours, and thereafter, washing the resultant with ion-exchanged water, and air-drying the resultant at normal temperature (25°C) for at least 12 hours was used.

(1) Modulus of Elasticity in Tension (MPa)

From the slope of the linear region in the stress-strain curve, the elastic modulus was calculated. Specifically, the slope of the linear region at the initial stage of the tensile test was obtained from the following equation, and the modulus of elasticity in tension E (MPa) was calculated.

$$E \text{ (MPa)} = \Delta\sigma \text{ (MPa)}/\Delta\varepsilon$$

(2) F30 (MPa)

On the horizontal axis of the stress-strain curve, the stress (MPa) at 0.3 in strain was read, and the read value was defined as F30 (MPa).

(3) F40 (MPa)

On the horizontal axis of the stress-strain curve, the stress (MPa) at 0.4 in strain was read, and the read value was defined as F40 (MPa).

(4) Toughness (J)

The integrated value of a test force F [N]-displacement ΔL [m] curve from the initial stage until fracturing was calculated as toughness (J) that was fracture energy.

<Tear Resistance (N)>

A tear test was carried out based on JIS K7128-3(1998) at 200 mm/min in test speed, and the obtained maximum tearing load (N) was defined as tear resistance (N). the measurement was carried out with respect to each of the MD direction and the TD direction.

Here, when the ion-exchange membrane was evaluated, a chloride ion-type dry membrane obtained by immersing the ion-exchange membrane in 0.5 mol/L NaCl aqueous solution for at least 10 hours, and thereafter, washing the resultant with ion-exchanged water, and air-drying the resultant at normal temperature (25°C) for at least 12 hours was used.

<Ion Exchange Capacity (IEC) (meq./g)>

The ion-exchange membrane was immersed in 0.5 mol/L NaCl aqueous solution for at least 10 hours to be of a chloride ion type. Next, the chloride ion-type membrane was brought into contact with 0.2 mol/L $NaNO_3$ aqueous solution, and thereby, substituted to be of nitrate ion type. The chloride ions released at this time were quantitated using silver nitrate aqueous solution with a potentiometric titrator (COMTITE-900 manufactured by HIRANUMA Co., Ltd.), and the obtained value was defined as A (mol).

Next, the same ion-exchange membrane was immersed in 0.5 mol/L NaCl aqueous solution for at least 4 hours to be of a chloride ion type again. The ion-exchange membrane after the immersion was sufficiently washed with ion-exchanged water, and thereafter, moisture on the surface portion thereof was wiped off, and the weight of the ion-exchange membrane in a wet state W (g) was measured. This ion-exchange membrane was subjected to reduced pressure drying at 60°C for 5 hours, and the weight thereof after drying D (g) was measured. From each of the measured values, the ion exchange capacity was obtained by the following equation:

$$\text{ion exchange capacity (meq./g)} = A \times 1000/D$$

<Membrane Resistance ($\Omega \cdot cm^2$)>

The ion-exchange membrane was immersed in 0.5 mol/L NaCl aqueous solution for at least 10 hours to be of a chloride ion type. The ion-exchange membrane after the foregoing process was disposed at the center of a two-compartment cell provided with platinum electrodes, and the compartments on both sides of the ion-exchange membrane were filled with 0.5 $mol \cdot L^{-1}$-NaCl aqueous solution. The resistance a ($\Omega \cdot cm^2$) between the electrodes at 25°C was measured using an AC bridge (1000 cycles per second in frequency). Similarly, the resistance b ($\Omega \cdot cm^2$) between the electrodes without any ion-exchange membrane disposed was measured. From the obtained measured values, the membrane resistance was calculated by the following equation.

$$\text{membrane resistance } (\Omega \cdot cm^2) = (a\text{-}b)$$

The obtained membrane resistance was divided by the membrane thickness ($\mu$m), and thereafter, multiplied by 20; thereby, the membrane resistance per 20 $\mu$m was calculated.

<Cycle Evaluation (Tenacity Evaluation)>

The ion-exchange membrane was cut to be 20 mm$\times$20 mm in size. The cut ion-exchange membrane was held between two stainless frames each having a hole of 15 mm in diameter at the central part thereof, and a width of 40 mm, a length of 40 mm, and a thickness of 1.5 mm to be screwed at four corners thereof and fixed. Next, the ion-exchange membrane held between the frames was immersed in warm ion-exchanged water of 60°C, and left stationarily for 30 minutes. Thereafter, the ion-exchange membrane was pulled up, and, after the moisture on the surface thereof was wiped off, was dried in an oven of 60°C for 1 hour. The foregoing operation was repeated 100 times, and thereafter, the ion-exchange membrane was removed from the frames, and the external appearance of the ion-exchange membrane was checked. When any crack was confirmed in a visual check on the external appearance, the ion-exchange membrane was evaluated as "bad".

The test was carried out using ten test specimens cut out from the one ion-exchange membrane. The evaluation was carried out based on the ratio of specimens in which any fault was confirmed as the results of the check on the external appearances. The evaluation results are expressed as follows:

circle: "bad" was zero or one out of the ten test specimens;
triangle: "bad" was two or three out of the ten test specimens; and
cross: "bad" was at least four out of the ten test specimens.

<Example 1>

(Production of Porous Membrane)

A resin composition was fed into a twin screw extruder: the resin composition was obtained by loading, in a Henschel mixer, and mixing 75 mass% homopolypropylene of 0.5 g/10min in MFR, 1,050,000 in weight-average molecular weight, 6 in molecular weight distribution, and 170°C in melting point as the polyolefin resin, and a 25 mass% propylene-ethylene-butene random copolymer including propylene as the major constituent (6.0 g/10min in MFR, 160°C in melting point, 340,000 in weight-average molecular weight, and 2.2 in molecular weight distribution) as the olefinic elastomer. Next, on the basis of the resin composition and a plasticizer in total (100 mass%), 60 mass% diisononyl phthalate as the plasticizer was added via a side feeder of the twin screw extruder, and the resultant was melt-kneaded at 100 rpm at 180°C, and thereby, a gel solution was obtained.

The obtained gel solution was extruded from a T-die disposed at the end of the twin screw extruder and then contacted with a cooling roll of 25°C to form the gel sheet having a thickness of approximately 1 mm.

The obtained gel sheet was subjected to biaxial stretching with a tenter-type simultaneous biaxial stretching apparatus at 130°C so as to be four times longer and four times wider, and the resultant biaxially stretched gel film was obtained. The obtained biaxially stretched gel film was immersed in acetone, so that diisononyl phthalate was removed by extraction; thereafter, the adhered acetone was removed by drying, and the resultant porous membrane was obtained. The obtained porous membrane was evaluated as described above. The results are shown in table 1.

(Production of Ion-Exchange Membrane)

A polymerizable monomer composition was obtained by mixing chloromethyl styrene (95 parts by mass), a styrene solution of 57 mass% divinylbenzene (5 parts by mass), a polymerization initiator (trade name: PERBUTYL O, 5 parts by mass), and an epoxy compound (trade name: Epolite 40E, 5 parts by mass). Into a 500 mL glass container, 400 g of the obtained polymerizable monomer composition was put, and the porous membrane produced in the aforementioned manner (20 cm×20 cm) was immersed in the polymerizable monomer composition.

Next, the porous membrane was taken out of the polymerizable monomer composition, and a 100 $\mu$m polyester film was layered on each side of the taken-out porous membrane as a separating material. The obtained layered body was heated in nitrogen under pressure at 0.3 MPa at 80°C for 5 hours, so that a polymerizable monomer composition in the porous membrane was polymerized.

The obtained matter in the form of membrane was immersed in aqueous solution containing 6 mass% trimethylamine and 25 mass% acetone at room temperature for 16 hours, so that the polymerized portion of chloromethyl styrene was aminated. The resultant was washed with pure water, and thereafter, was air-dried for at least 16 hours, and the resultant ion-exchange membrane was obtained. The obtained ion-exchange membrane was evaluated as described above. The results are shown in table 2.

<Examples 2 to 9 and 20, and Comparative Examples 1 to 9>

Porous membranes and ion-exchange membranes were made in the same manner as in example 1 except that the mixing ratio of the polyolefin resin, the olefinic elastomer, and the plasticizer, and the stretching temperature and the stretching power were changed as shown in table 1. The obtained porous membranes and ion-exchange membranes were evaluated as described above. The results are shown in tables 1 and 2.

<Example 10>

The same polyolefin resin, olefinic elastomer, and plasticizer as those in example 1 were used. To a resin composition containing 90 mass% of the polyolefin resin and 10 mass% of the olefinic elastomer, 60 mass% of the plasticizer was added. The resultant was fed into Labo Plastomill manufactured by Toyo Seiki Seisaku-sho, and melt-kneaded at 50 rpm at 180°C, and the resultant gel solution was obtained. The obtained gel solution was solidified at room temperature, and the resultant gel solid matter was obtained. A certain amount of the obtained gel solid matter was cut out, pressed in the form of sheet by using a compression molding machine heated at 180°C, and thereafter, introduced into water with ice of 0°C to be solidified by cooling, and the resultant gel sheet having a thickness of approximately 0.5 mm was obtained.

The obtained gel sheet was subjected to biaxial stretching with a small-scale tenter-type batch stretching apparatus at 145°C so as to be four times longer and four times wider, and the resultant gel film was obtained. The obtained gel film was immersed in acetone, so that diisononyl phthalate was removed by extraction; thereafter, the adhered acetone was removed by drying, and the resultant porous membrane was obtained. An ion-exchange membrane was obtained by using the obtained porous membrane in the same manner as in example 1. The obtained porous membrane and ion-exchange membrane were evaluated as described above. The results are shown in tables 1 and 2.

<Examples 11 to 18 and Comparative Example 10>

Porous membranes and ion-exchange membranes were made in the same manner as in example 10 except that the mixing ratio of the polyolefin resin, the olefinic elastomer, and the plasticizer was changed as shown in table 1. The obtained porous membranes and ion-exchange membranes were evaluated as described above. The results are shown in tables 1 and 2.

<Example 19>

A porous membrane and an ion-exchange membrane were made in the same manner as in example 10 except that homopolypropylene having a MFR of 0.5 g/10min, a weight-average molecular weight of 1,020,000, a molecular weight distribution of 8.8, and a melting point of 162°C was used as the polyolefin resin. The obtained porous membrane and ion-exchange membrane were evaluated as described above. The results are shown in tables 1 and 2.

<Comparative Example 11>

A porous membrane was tried to be produced in the same manner as in example 1 except that the compounding ratio of the polyolefin resin, the olefinic elastomer, and the plasticizer was as shown in table 1. Because of a large amount of the plasticizer, the gel solution became soft, and the gel composition tore off when extruded from a T die to a roll, so that a gel sheet could not be obtained.

<Comparative Example 12>

A porous membrane was tried to be produced in the same manner as in example 1 except that the compounding ratio of the polyolefin resin, the olefinic elastomer, and the plasticizer, and the stretching temperature and power were as shown in table 1. In stretching, the gel film broke many times due to coming-off of clips of the stretching apparatus so that a porous membrane could not be obtained.

<Comparative Example 13>

A porous membrane was tried to be produced in the same manner as in example 1 except that the compounding ratio of the polyolefin resin, the olefinic elastomer, and the plasticizer, and the stretching temperature and power were as shown in table 1. In stretching, the film broke so that a porous membrane could not be obtained.

<Example 21>

A porous membrane and an ion-exchange membrane were made in the same manner as in example 10 except that Vistamaxx3000, which is a propylene-based elastomer manufactured by Exxon Mobil Corporation, was used as the olefinic elastomer, the gel sheet at the initial stage was molded to have a thickness of approximately 1.0 mm, and the mixing ratio of the polyolefin resin, the olefinic elastomer, and the plasticizer was changed as shown in table 1. The obtained porous membrane and ion-exchange membrane were evaluated as described above. The results are shown in tables 1 and 2.

<Example 22>

A porous membrane and an ion-exchange membrane were made in the same manner as in example 21 except that Vistamaxx3980FL, which is a propylene-based elastomer manufactured by Exxon Mobil Corporation, was used as the olefinic elastomer. The obtained porous membrane and ion-exchange membrane were evaluated as described above. The results are shown in tables 1 and 2.

<Example 23>

A porous membrane and an ion-exchange membrane were made in the same manner as in example 21 except that Vistamaxx3588FL, which is a propylene-based elastomer manufactured by Exxon Mobil Corporation, was used as the olefinic elastomer. The obtained porous membrane and ion-exchange membrane were evaluated as described above. The results are shown in tables 1 and 2.

<Examples 24 to 26>

Porous membranes and ion-exchange membranes were made in the same manner as in example 1 except that when the porous membrane was produced, stretching was performed by a sequential stretching method of stretching in the MD direction, and next in the TD direction by the use of a roll-type length stretching apparatus, and a tenter-type width stretching apparatus, and the stretching power and the stretching temperature were as shown in table 1. The obtained porous membranes and ion-exchange membranes were evaluated as described above. The results are shown in tables 1 and 2.

[Table 1]

[Table 1]

[Table 1]

| | polypro-pylene | propy-lene-based copoly-mer | amou-nt of adding plasti-cizer | stretc-hing power | stretch-ing method | stretch-ing tem-perature | thick-ness | por-osity | air resis-tance per 20 μm | elas-tic mod-ulus in MD | elas-tic mod-ulus in TD | MD_-F30 | TD_-F30 | MD_-F40 | TD_-F40 | M-D_F4-0-F30 | TD_-F40-F30 | MD tough-ness | TD tough-ness |
|---|---|---|---|---|---|---|---|---|---|---|---|---|---|---|---|---|---|---|---|
| | [mass%] | [mas-s%] | [wt%] | MD×-TD [times] | [-] | [°C] | [μm] | [%] | [s] | [MPa] | [MPa] | [MPa] | [MP-a] | [MPa] | [MP-a] | [M-Pa] | [MPa] | [J] | [J] |
| Example 1 | 75 | 25 | 60 | 4×4 | simultaneous | 130 | 27 | 37 | 624 | 438 | 402 | 33.8 | 23.2 | 38.0 | 26.3 | 4.2 | 3.1 | 0.48 | 0.63 |
| Example 2 | 75 | 25 | 60 | 4×4 | simultaneous | 140 | 24 | 38 | 632 | 506 | 378 | 32.2 | 23.8 | 37.0 | 27.4 | 4.9 | 3.6 | 0.56 | 0.62 |
| Example 3 | 75 | 25 | 60 | 4×4 | simultaneous | 138 | 57 | 37 | 1037 | 475 | 341 | 32.6 | 22.9 | 36.2 | 25.6 | 3.6 | 2.7 | 0.72 | 0.61 |
| Example 4 | 75 | 25 | 60 | 4×4 | simultaneous | 140 | 59 | 40 | 847 | 460 | 457 | 27.3 | 25.9 | 30.4 | 28.5 | 3.1 | 2.6 | 0.61 | 0.61 |
| Example 5 | 75 | 25 | 60 | 4×4 | simultaneous | 142 | 55 | 39 | 898 | 500 | 470 | 28.1 | 27.7 | 31.3 | 30.8 | 3.2 | 3.1 | 0.73 | 0.64 |
| Example 6 | 75 | 25 | 60 | 4×4 | simultaneous | 145 | 62 | 43 | 721 | 431 | 407 | 26.3 | 25.6 | 29.4 | 28.5 | 3.1 | 2.8 | 0.66 | 0.65 |
| Example 7 | 75 | 25 | 60 | 4×4 | simultaneous | 148 | 62 | 37 | 830 | 430 | 405 | 24.6 | 24.2 | 27.7 | 27.2 | 3.0 | 3.0 | 0.78 | 0.79 |
| Example 8 | 75 | 25 | 60 | 4×4 | simultaneous | 151 | 58 | 34 | 952 | 339 | 313 | 22.1 | 21.2 | 25.4 | 24.3 | 3.2 | 3.0 | 1.01 | 1.01 |
| Example 9 | 75 | 25 | 60 | 5×5 | simultaneous | 140 | 18 | 35 | 1102 | 464 | 462 | 37.0 | 33.3 | 42.2 | 38.7 | 5.2 | 5.5 | 0.44 | 0.48 |
| Example 10 | 90 | 10 | 60 | 4×4 | simultaneous | 145 | 40 | 37 | 982 | 358 | 340 | 32.3 | 37.3 | 36.8 | 43.6 | 4.6 | 6.3 | 0.67 | 0.67 |
| Example 11 | 90 | 10 | 55 | 4×4 | simultaneous | 145 | 37 | 29 | 1340 | 476 | 474 | 37.9 | 35.5 | 43.6 | 41.2 | 5.7 | 5.7 | 0.57 | 0.57 |

Evaluation of porous membrane

(continued)

Evaluation of porous membrane

| | polypropylene [mass%] | propylene-based copolymer [mass%] | amount of adding plasticizer [wt%] | stretching power MD×TD [times] | stretching method [-] | stretching temperature [°C] | thickness [μm] | porosity [%] | air resistance per 20 μm [s] | elastic modulus in MD [MPa] | elastic modulus in TD [MPa] | MD_F30 [MPa] | TD_F30 [MPa] | MD_F40 [MPa] | TD_F40 [MPa] | MD_F40-F30 [MPa] | TD_F40-F30 [MPa] | MD toughness [J] | TD toughness [J] |
|---|---|---|---|---|---|---|---|---|---|---|---|---|---|---|---|---|---|---|---|
| Example 12 | 90 | 10 | 65 | 4×4 | simultaneous | 145 | 41 | 32 | 779 | 310 | 291 | 24.6 | 31.4 | 28.3 | 35.2 | 3.6 | 3.8 | 0.45 | 0.45 |
| Example 13 | 80 | 20 | 60 | 4×4 | simultaneous | 145 | 44 | 37 | 811 | 287 | 269 | 25.3 | 24.2 | 29.1 | 27.5 | 3.7 | 3.3 | 0.90 | 0.90 |
| Example 14 | 70 | 30 | 60 | 4×4 | simultaneous | 145 | 35 | 25 | 1651 | 273 | 270 | 21.5 | 25.1 | 24.9 | 27.8 | 3.4 | 2.7 | 1.07 | 1.07 |
| Example 15 | 70 | 30 | 65 | 4×4 | simultaneous | 145 | 33 | 29 | 1517 | 204 | 185 | 18.8 | 20.3 | 22.2 | 24.5 | 3.4 | 4.2 | 0.74 | 1.07 |
| Example 16 | 60 | 40 | 60 | 4×4 | simultaneous | 145 | 33 | 11 | 5297 | 286 | 283 | 22.7 | 20.4 | 26.8 | 24.5 | 4.2 | 4.1 | 1.05 | 1.05 |
| Example 17 | 60 | 40 | 55 | 4×4 | simultaneous | 145 | 38 | 26 | 2191 | 325 | 307 | 23.7 | 22.0 | 27.6 | 26.3 | 3.9 | 4.3 | 1.06 | 1.06 |
| Example 18 | 60 | 40 | 65 | 4×4 | simultaneous | 145 | 31 | 12 | 6396 | 238 | 233 | 16.8 | 22.8 | 19.9 | 26.7 | 3.1 | 4.0 | 0.80 | 0.80 |
| Example 19 | 90 | 10 | 60 | 4×4 | simultaneous | 145 | 39 | 40 | 737 | 416 | 405 | 27.0 | 26.0 | 31.0 | 29.0 | 4.0 | 3.0 | 0.60 | 0.60 |
| Example 20 | 75 | 25 | 60 | 5×5 | simultaneous | 138 | 15 | 30 | 958 | 250 | 340 | 28.2 | 26.5 | 32.7 | 30.7 | 4.0 | 4.1 | 0.42 | 0.46 |
| Example 21 | 75 | 25 | 60 | 4×4 | simultaneous | 145 | 55 | 31 | 1094 | 282 | 280 | 25.8 | 26.0 | 29.5 | 29.8 | 3.8 | 3.8 | 0.76 | 0.75 |
| Example 22 | 75 | 25 | 60 | 4×4 | simultaneous | 145 | 67 | 35 | 1002 | 491 | 495 | 30.1 | 30.3 | 33.6 | 33.4 | 3.5 | 3.1 | 0.54 | 0.57 |

(continued)

Evaluation of porous membrane

| | polypropylene [mass%] | propylene-based copolymer [mass%] | amount of adding plasticizer [wt%] | stretching power MD×TD [times] | stretching method [-] | stretching temperature [°C] | thickness [μm] | porosity [%] | air resistance per 20 μm [s] | elastic modulus in MD [MPa] | elastic modulus in TD [MPa] | MD_F30 [MPa] | TD_F30 [MPa] | MD_F40 [MPa] | TD_F40 [MPa] | MD_F40-F30 [MPa] | TD_F40-F30 [MPa] | MD toughness [J] | TD toughness [J] |
|---|---|---|---|---|---|---|---|---|---|---|---|---|---|---|---|---|---|---|---|
| Example 23 | 75 | 25 | 60 | 4×4 | simultaneous | 145 | 79 | 41 | 783 | 397 | 380 | 28.1 | 27.6 | 31.6 | 30.5 | 3.5 | 2.9 | 0.84 | 0.81 |
| Example 24 | 75 | 25 | 60 | 5×3.7 | sequential | 145 | 38 | 42 | 621 | 421 | 527 | 32.4 | 40.2 | 37.9 | 45.4 | 5.6 | 5.2 | 0.59 | 0.70 |
| Example 25 | 75 | 25 | 60 | 5×5.7 | sequential | 145 | 29 | 43 | 653 | 420 | 945 | 26.7 | 79.1 | 32.0 | 86.5 | 5.4 | 7.5 | 0.53 | 0.47 |
| Example 26 | 75 | 25 | 60 | 5×6.7 | sequential | 145 | 26 | 41 | 735 | 451 | 1075 | 25.8 | 97.9 | 30.7 | 106.1 | 4.9 | 8.2 | 0.50 | 0.39 |
| Comparative example 1 | 75 | 25 | 60 | 6×6 | simultaneous | 140 | 10 | 30 | 2265 | 598 | 578 | 51.1 | 36.6 | 60.4 | 43.7 | 9.3 | 7.0 | 0.20 | 0.29 |
| Comparative example 2 | 75 | 25 | 60 | 6×6 | simultaneous | 150 | 9 | 33 | 939 | 392 | 368 | 24.7 | 34.8 | 29.8 | 40.5 | 5.1 | 5.7 | 0.21 | 0.15 |
| Comparative example 3 | 75 | 25 | 60 | 3×3 | simultaneous | 120 | 54 | 46 | 61 | 316 | 234 | 20.0 | 13.8 | 22.1 | 15.3 | 2.1 | 1.5 | 0.41 | 0.46 |
| Comparative example 4 | 75 | 25 | 60 | 3×3 | simultaneous | 150 | 35 | 45 | 519 | 234 | 256 | 14.7 | 19.0 | 16.5 | 21.6 | 1.8 | 2.5 | 0.68 | 0.82 |

| | | Evaluation of porous membrane | | | | | | | | | | | | | | | | | |
|---|---|---|---|---|---|---|---|---|---|---|---|---|---|---|---|---|---|---|---|
| | polypropylene | propylene-based copolymer | amount of adding plasticizer | stretching power MD×TD | stretching method | stretching temperature | thickness | porosity | air resistance per 20 μm | elastic modulus in MD | elastic modulus in TD | MD_F30 | TD_F30 | MD_F40 | TD_F40 | MD_F40-F30 | TD_F40-F30 | MD toughness | TD toughness |
| | [mass%] | [mass%] | [wt%] | [times] | [-] | [°C] | [μm] | [%] | [s] | [MPa] | [MPa] | [MPa] | [MPa] | [MPa] | [MPa] | [MPa] | [MPa] | [J] | [J] |
| Comparative example 5 | 100 | 0 | 60 | 4×4 | simultaneous | 120 | 32 | 44 | 736 | 538 | 443 | | 24.0 | - | - | - | - | 0.07 | 0.06 |
| Comparative example 6 | 100 | 0 | 60 | 4×4 | simultaneous | 130 | 27 | 42 | 738 | 639 | 469 | 38.5 | 29.9 | - | 30.1 | | 0.2 | 0.08 | 0.13 |
| Comparative example 7 | 100 | 0 | 60 | 4×4 | simultaneous | 140 | 23 | 45 | 783 | 644 | 521 | 38.5 | 29.9 | 43.8 | 33.9 | 5.2 | 4.0 | 0.13 | 0.15 |
| Comparative example 8 | 100 | 0 | 60 | 5×5 | simultaneous | 140 | 16 | 40 | 1047 | 808 | 608 | 32.3 | 41.8 | 61.3 | 46.3 | 29.0 | 4.4 | 0.15 | 0.15 |
| Comparative example 9 | 100 | 0 | 60 | 5×5 | simultaneous | 150 | 13 | 40 | 787 | 480 | 730 | 32.3 | 41.8 | 37.7 | 47.7 | 5.3 | 5.9 | 0.21 | 0.23 |
| Comparative example 10 | 50 | 50 | 60 | 4×4 | simultaneous | 145 | 9 | 0 | 999999 | 30 | 28 | 12.0 | 13.0 | 15.0 | 16.0 | 3.0 | 3.0 | 0.68 | 0.64 |

EP 4 506 397 A1

(continued)

| | polypro-pylene | propy-lene-based copoly-mer | amou-nt of adding plasti-cizer | stretc-hing power | stretch-ing method | stretch-ing tem-perature | thick-ness | por-osity | air resis-tance per 20 μm | elas-tic mod-ulus in MD | elas-tic mod-ulus in TD | MD_-F30 | TD_-F30 | MD_-F40 | TD_-F40 | M-D_F4-0-F30 | TD_-F40-F30 | MD tough-ness | TD_tough-ness |
|---|---|---|---|---|---|---|---|---|---|---|---|---|---|---|---|---|---|---|---|
| | \[mass%] | \[mas-s%] | \[wt%] | MD×-TD \[times] | \[-] | \[°C] | \[μm] | \[%] | \[s] | \[MPa] | \[MPa] | \[MPa] | \[MP-a] | \[MPa] | \[MP-a] | \[M-Pa] | \[MPa] | \[J] | \[J] |
| Com-parative example 11 | 75 | 25 | 75 | 4×4 | simultaneous | - | no sheet could be forme | | | | | | | | | | | | |
| Comparative example 12 | 75 | 25 | 60 | 4×4 | simultaneous | 115 | gel film broke so that no membrane could be produced | | | | | | | | | | | | |
| Comparative example 13 | 75 | 25 | 60 | 4×4 | simultaneous | 160 | gel film broke so that no membrane could be produced | | | | | | | | | | | | |

[Table 2]

| [Table 2] | Evaluation of ion-exchange membrane | | | | | | | | |
|---|---|---|---|---|---|---|---|---|---|
| | thickness | elastic modulus in MD | elastic modulus in TD | MD toughness | TD_ toughness | tearing resistance in MD | tearing resistance in TD | ion exchange capacity | membrane resistance per 20 μm | result of tevaluation on tenacity |
| | [μm] | [MPa] | [MPa] | [J] | [J] | [N] | [N] | [meq./g] | [Ω · cm$^2$] | |
| Example 1 | 37 | 1018 | 982 | 0.40 | 0.26 | 3.5 | 5.3 | 2.2 | 0.26 | △ |
| Example 2 | 31 | 1147 | 965 | 0.42 | 0.52 | 4.4 | 4.6 | 2.2 | 0.24 | ○ |
| Example 3 | 79 | 1065 | 1060 | 0.41 | 0.29 | 7.0 | 6.7 | 2.2 | 0.30 | ○ |
| Example 4 | 87 | 1109 | 1102 | 0.31 | 0.35 | 6.8 | 5.4 | 2.4 | 0.23 | ○ |
| Example 5 | 75 | 1106 | 1239 | 0.66 | 0.36 | 7.3 | 6.5 | 2.2 | 0.26 | ○ |
| Example 6 | 81 | 1271 | 1250 | 0.37 | 0.36 | 4.7 | 7.3 | 2.3 | 0.28 | ○ |
| Example 7 | 80 | 1107 | 1122 | 0.53 | 0.41 | 7.6 | 7.3 | 2.3 | 0.28 | ○ |
| Example 8 | 75 | 1127 | 1168 | 0.50 | 0.27 | 6.2 | 6.9 | 2.3 | 0.27 | ○ |
| Example 9 | 24 | 1097 | 1084 | 0.31 | 0.39 | 3.8 | 3.6 | 2.1 | 0.27 | △ |
| Example 10 | 52 | 1071 | 1061 | 0.29 | 0.30 | 5.5 | 5.6 | 2.3 | 0.19 | ○ |
| Example 11 | 61 | 1055 | 1043 | 0.59 | 0.61 | 7.3 | 7.3 | 2.2 | 0.20 | ○ |
| Example 12 | 47 | 955 | 942 | 0.25 | 0.26 | 5.2 | 5.2 | 2.5 | 0.17 | ○ |
| Example 13 | 52 | 830 | 821 | 0.46 | 0.46 | 6.7 | 6.7 | 2.3 | 0.30 | ○ |
| Example 14 | 41 | 668 | 665 | 0.39 | 0.39 | 4.0 | 4.0 | 2.2 | 0.56 | △ |
| Example 15 | 44 | 771 | 770 | 0.25 | 0.26 | 4.3 | 4.3 | 2.5 | 0.52 | ○ |
| Example 16 | 42 | 506 | 500 | 0.55 | 0.56 | 6.4 | 6.4 | 2.1 | 0.67 | ○ |
| Example 17 | 47 | 594 | 584 | 0.50 | 0.51 | 8.4 | 8.5 | 1.9 | 0.61 | ○ |
| Example 18 | 41 | 621 | 617 | 0.29 | 0.30 | 3.9 | 3.9 | 2.2 | 0.68 | △ |
| Example 19 | 44 | 1017 | 1015 | 0.43 | 0.43 | 5.9 | 6.0 | 2.3 | 0.33 | ○ |
| Example 20 | 20 | 1097 | 1089 | 0.32 | 0.38 | 3.5 | 3.6 | 2.1 | 0.28 | ○ |

(continued)

| [Table 2] | | | | | | | | | | |
|---|---|---|---|---|---|---|---|---|---|---|
| | Evaluation of ion-exchange membrane | | | | | | | | | |
| | thickness | elastic modulus in MD | elastic modulus in TD | MD toughness | TD_ toughness | tearing resistance in MD | tearing resistance in TD | ion exchange capacity | membrane resistance per 20 $\mu$m | result of tevaluation on tenacity |
| | [$\mu$m] | [MPa] | [MPa] | [J] | [J] | [N] | [N] | [meq./g] | [$\Omega \cdot cm^2$] | |
| Example 21 | 58 | 896 | 900 | 0.26 | 0.27 | 3.6 | 3.5 | 2.3 | 0.68 | △ |
| Example 22 | 79 | 896 | 884 | 0.24 | 0.26 | 3.5 | 3.8 | 2.3 | 0.62 | △ |
| Example 23 | 90 | 802 | 825 | 0.50 | 0.48 | 4.4 | 4.2 | 2.1 | 0.54 | ○ |
| Example 24 | 52 | 1054 | 1163 | 0.47 | 0.26 | 5.3 | 6.0 | 2.5 | 0.20 | ○ |
| Example 25 | 42 | 1145 | 1298 | 0.32 | 0.39 | 4.4 | 4.7 | 2.5 | 0.12 | ○ |
| Example 26 | 37 | 1173 | 1486 | 0.31 | 0.28 | 4.0 | 4.0 | 2.4 | 0.13 | △ |
| Comparative example 1 | 15 | 1541 | 1156 | 0.21 | 0.22 | 0.9 | 1.6 | 2.2 | 0.40 | × |
| Comparative example 2 | 12 | 1218 | 1197 | 0.09 | 0.06 | 0.7 | 1.4 | 2.3 | 0.27 | × |
| Comparative example 3 | 67 | 967 | 1015 | 0.14 | 0.11 | 4.1 | 2.9 | 2.2 | 0.22 | × |
| Comparative example 4 | 40 | 519 | 507 | 0.17 | 0.15 | 2.4 | 1.6 | 2.4 | 0.27 | × |
| Comparative example 5 | 45 | 1464 | 1345 | 0.18 | 0.11 | 3.1 | 3.3 | 2.6 | 0.23 | × |
| Comparative example 6 | 35 | 1559 | 1511 | 0.17 | 0.13 | 2.5 | 2.9 | 2.6 | 0.29 | × |
| Comparative example 7 | 33 | 1504 | 1377 | 0.21 | 0.19 | 3.4 | 2.9 | 2.4 | 0.18 | × |
| Comparative example 8 | 22 | 1706 | 1594 | 0.20 | 0.20 | 2.5 | 2.8 | 2.5 | 0.25 | × |
| Comparative example 9 | 17 | 1485 | 1594 | 0.13 | 0.12 | 2.1 | 2.3 | 2.4 | 0.17 | × |

[Table 2]

| | | Evaluation of ion-exchange membrane | | | | | | | | |
|---|---|---|---|---|---|---|---|---|---|---|
| | thickness | elastic modulus in MD | elastic modulus in TD | MD toughness | TD_ toughness | tearing resistance in MD | tearing resistance in TD | ion exchange capacity | membrane resistance per 20 $\mu$m | result of tevaluation on tenacity |
| | [$\mu$m] | [MPa] | [MPa] | [J] | [J] | [N] | [N] | [meq./g] | [$\Omega \cdot cm^2$] | |
| Comparative example 10 | 12 | membrane resistance or ion exchange capacity could not be measured, and thus, evaluation on others was not performed | | | | | | unmeasurable | 1000< | not done |
| Comparative example 11 | - | | | | | | | | | |
| Comparative example 12 | - | | | | | | | | | |
| Comparative example 13 | - | | | | | | | | | |

EP 4 506 397 A1

As can be seen from table 2, with respect to the ion-exchange membrane according to the present invention (examples 1 to 26), the tear resistance was at least 3.5 N in both the MD direction and the TD direction, and the evaluation on tenacity was a triangle or circle, which was good. In contrast to this, with respect to the ion-exchange membrane of comparative example 10, the porosity of the polyolefin-based porous membrane was so low that the membrane resistance or the ion exchange capacity of the obtained ion-exchange membrane could not be measured.

With respect to each of the ion-exchange membranes of comparative examples 1 to 9, the tear resistance was lower than 3.5 N in at least either the MD direction or the TD direction, and the evaluation on tenacity was a cross, which was bad. In comparative example 11, the amount of adding the plasticizer was outside any of the preferred ranges according to the invention of the present application, and in comparative examples 12 and 13, the stretching temperatures were outside any of the preferred ranges of the invention of the present application; therefore, no porous membrane could be obtained.

As can be seen from table 1, with respect to the polyolefin-based porous membrane according to the present invention (examples 1 to 26), the toughness was at least 0.35 J in both the MD direction and the TD direction, and "F40-F30" was at least 2.0 MPa; thereby, the evaluation on tenacity of the obtained ion-exchange membrane was a triangle or a circle as shown in table 2, which was good.

In contrast to this, with respect to each of the porous membranes of comparative examples 1, 2, and 5 to 9, the toughness was less than 0.35 J, and with respect to each of the porous membranes of comparative examples 3 and 4, "F40-F30" was less than 2.0 MPa in either the MD direction or the TD direction; the evaluation on tenacity of the obtained ion-exchange membrane in each of the aforementioned examples was a crosse, which was bad. In comparative example 10, the content of the polyolefin-based elastomer in the resin composition constituting the gel solution was outside any of the preferred ranges of the invention of the present application. Therefore, as shown in table 1, the porosity of the obtained membrane was 0%, that is, no voids could be formed, which was bad as a porous membrane. Since no pores was formed, the ion exchange resin could not fill the inside, the membrane resistance of the obtained ion-exchange membrane was extremely high as shown in table 2, and the ion exchange capacity could not be measured, which was bad as an ion-exchange membrane.

As can be seen from table 1, according to the method of producing the polyolefin-based porous membrane according to the present invention (examples 1 to 20), the evaluation on tenacity of the obtained ion-exchange membrane was a triangle or a circle as shown in table 2, which was good.

In contrast to this, according to each of the methods of comparative examples 1 to 4, the stretching power was outside any of the preferred ranges of the invention of the present application; therefore, the evaluation on tenacity of the obtained ion-exchange membrane was a crosse as shown in table 2, which was bad.

According to each of the methods of comparative examples 5 to 9, the resin composition constituting the gel solution did not contain the polyolefin-based elastomer; therefore, the evaluation on tenacity of the obtained ion-exchange membrane was a crosse as shown in table 2, which was bad.

According to the method of comparative example 10, the content of the polyolefin-based elastomer in the resin composition constituting the gel solution was outside any of the preferred ranges of the invention of the present application. Therefore, as shown in table 1, the porosity of the obtained membrane was 0%, that is, no pores were formed, which was bad as a porous membrane. Since no pores was formed, the ion exchange resin could not fill the inside, the membrane resistance of the obtained ion-exchange membrane was extremely high as shown in table 2, and the ion exchange capacity could not be measured, which was bad as an ion-exchange membrane.

[Reference Signs List]

1    anion exchange membrane

2    anode
3    cathode
4    gas diffusion layer
5    anode chamber
6    water feeding port
7    oxygen discharge port
8    cathode chamber
9    hydrogen discharge port

**Claims**

**1.** An ion-exchange membrane comprising:

a porous support; and
an ion exchange resin filling pores of the porous support, wherein
a tear resistance in each of a MD direction and a TD direction is at least 3.5 N.

2. The ion-exchange membrane according to claim 1, wherein
the tear resistance in each of the MD direction and the TD direction is 3.5 N to 15 N.

3. An ion-exchange membrane comprising:

a porous support; and
an ion exchange resin filling pores of the porous support, wherein
a toughness in each of a MD direction and a TD direction is at least 0.25 J.

4. The ion-exchange membrane according to claim 3, wherein
the toughness in each of the MD direction and the TD direction is 0.25 J to 1.00 J.

5. The ion-exchange membrane according to claim 1 or 3, wherein
an elastic modulus in each of the MD direction and the TD direction is 500 MPa to 1800 MPa.

6. The ion-exchange membrane according to claim 1 or 3, wherein
a membrane resistance per 20 $\mu$m is at most 0.5 $\Omega \cdot cm^2$.

7. The ion-exchange membrane according to claim 1 or 3, wherein
a thickness is 10 $\mu$m to 200 $\mu$m.

8. The ion-exchange membrane according to claim 1 or 3, wherein
the ion exchange resin is a hydrocarbon polymer.

9. The ion-exchange membrane according to claim 1 or 3, wherein
the ion exchange resin includes an anion exchange resin.

10. The ion-exchange membrane according to claim 1 or 3, wherein
the porous support is a porous membrane containing a polyolefin resin.

11. The ion-exchange membrane according to claim 10, wherein
the polyolefin resin includes a polypropylene resin.

12. A polyolefin-based porous membrane, wherein

a toughness in each of an MD direction and a TD direction is at least 0.35 J, and
"F40-F30" in each of the MD and TD directions is at least 2.0 MPa where F40 (MPa) is stress at 0.4 in strain and
F30 is stress at 0.3 in strain on a horizontal axis of a stress-strain curve obtained by a tensile test.

13. The polyolefin-based porous membrane according to claim 12, comprising:
at least 60 mass% polypropylene based on a resin composition constituting the polyolefin-based porous membrane.

14. The polyolefin-based porous membrane according to claim 12 or 13, comprising:
a 5 mass% to 40 mass% olefinic elastomer based on the resin composition constituting the polyolefin-based porous membrane.

15. The polyolefin-based porous membrane according to claim 12 or 13, wherein
a thickness is 10 $\mu$m to 150 $\mu$m.

16. The polyolefin-based porous membrane according to claim 12 or 13, wherein
an air resistance for 100 cc of air per 20 $\mu$m in thickness conforming to Japan Industrial Standards P 8117:2009 is 300 seconds to 7000 seconds.

17. The polyolefin-based porous membrane according to claim 12 or 13, wherein

the polyolefin-based porous membrane is used as a support for an ion exchange resin.

18. An ion-exchange membrane, comprising:

the polyolefin-based porous membrane according to claim 12 or 13 as a support; and
an ion exchange resin filling pores of the support.

19. A membrane electrode assembly, comprising:

the ion-exchange membrane according to claim 1, 3 or 18; and
an electrode.

20. A water electrolyzer, comprising:
the ion-exchange membrane according to claim 1, 3 or 18.

21. A water electrolyzer, comprising:
the membrane electrode assembly according to claim 19.

22. A method of producing a polyolefin-based porous membrane, the method comprising the following (a) to (d):

(a) melt-kneading a resin composition containing a polyolefin resin and an olefinic elastomer, and a plasticizer to obtain a gel solution, a content of the olefinic elastomer in the resin composition being at least 5 mass% and less than 50 mass% based on the resin composition;
(b) cooling the gel solution to obtain a gel sheet;
(c) subjecting the gel sheet to biaxial stretching, so that an areal stretch ratio in a MD and a TD is 10 to 35 to obtain a biaxially stretched gel film; and
(d) washing the gel film with a solvent, and drying the washed film to obtain the polyolefin-based porous membrane.

23. The method of producing a polyolefin-based porous membrane according to claim 22, wherein
the polyolefin resin includes polypropylene.

24. The method of producing a polyolefin-based porous membrane according to claim 22 or 23, wherein
an amount of adding the plasticizer is 40 mass% to 70 mass% based on the gel solution.

25. The method of producing a polyolefin-based porous membrane according to claim 22 or 23, wherein
the olefinic elastomer is a propylene-based copolymer.

26. The method of producing a polyolefin-based porous membrane according to claim 22 or 23, wherein
a melting point of the olefinic elastomer measured by DSC (differential scanning calorimetric measurement) based on JIS K 7121(1987) is "a melting point of the polyolefin resin minus 15"°C to "the melting point of the polyolefin resin plus 5"°C.

**Amended claims under Art. 19.1 PCT**

1. An ion-exchange membrane comprising:

a porous support; and
an ion exchange resin filling pores of the porous support, wherein
a tear resistance in each of a MD direction and a TD direction is at least 3.5 N.

2. The ion-exchange membrane according to claim 1, wherein
the tear resistance in each of the MD direction and the TD direction is 3.5 N to 15 N.

3. An ion-exchange membrane comprising:

a porous support; and
an ion exchange resin filling pores of the porous support, wherein

a toughness in each of a MD direction and a TD direction is at least 0.25 J.

4. The ion-exchange membrane according to claim 3, wherein
the toughness in each of the MD direction and the TD direction is 0.25 J to 1.00 J.

5. The ion-exchange membrane according to claim 1 or 3, wherein
an elastic modulus in each of the MD direction and the TD direction is 500 MPa to 1800 MPa.

6. The ion-exchange membrane according to claim 1 or 3, wherein
a membrane resistance per 20 $\mu$m is at most 0.5 $\Omega \cdot$cm$^2$.

7. The ion-exchange membrane according to claim 1 or 3, wherein
a thickness is 10 $\mu$m to 200 $\mu$m.

8. The ion-exchange membrane according to claim 1 or 3, wherein
the ion exchange resin is a hydrocarbon polymer.

9. The ion-exchange membrane according to claim 1 or 3, wherein
the ion exchange resin includes an anion exchange resin.

10. The ion-exchange membrane according to claim 1 or 3, wherein
the porous support is a porous membrane containing a polyolefin resin.

11. The ion-exchange membrane according to claim 10, wherein
the polyolefin resin includes a polypropylene resin.

12. (amended) A polyolefin-based porous membrane, <u>comprising:</u>

<u>at least 60 mass% polypropylene based on a resin composition constituting the polyolefin-based porous membrane</u>, wherein
a toughness in each of an MD direction and a TD direction is at least 0.35 J, and
"F40-F30" in each of the MD and TD directions is at least 2.0 MPa where F40 (MPa) is stress at 0.4 in strain and F30 is stress at 0.3 in strain on a horizontal axis of a stress-strain curve obtained by a tensile test.

13.

14. (amended) The polyolefin-based porous membrane according to claim 12, comprising:
a 5 mass% to 40 mass% olefinic elastomer based on the resin composition constituting the polyolefin-based porous membrane.

15. (amended) The polyolefin-based porous membrane according to claim 12 or 14, wherein
a thickness is 10 $\mu$m to 150 $\mu$m.

16. (amended) The polyolefin-based porous membrane according to claim 12 or 14, wherein
an air resistance for 100 cc of air per 20 $\mu$m in thickness conforming to Japan Industrial Standards P 8117:2009 is 300 seconds to 7000 seconds.

17. (amended) The polyolefin-based porous membrane according to claim 12 or 14, wherein
the polyolefin-based porous membrane is used as a support for an ion exchange resin.

18. (amended) An ion-exchange membrane, comprising:

the polyolefin-based porous membrane according to claim 12 or 14 as a support; and
an ion exchange resin filling pores of the support.

19. A membrane electrode assembly, comprising:

the ion-exchange membrane according to claim 1, 3 or 18; and

an electrode.

20. A water electrolyzer, comprising:
the ion-exchange membrane according to claim 1, 3 or 18.

21. A water electrolyzer, comprising:
the membrane electrode assembly according to claim 19.

22. (amended) A method of producing a polyolefin-based porous membrane, the method comprising the following (a) to (d):

(a) melt-kneading a resin composition containing a polyolefin resin and an olefinic elastomer, the polyolefin resin including polypropylene, and a plasticizer to obtain a gel solution, a content of the olefinic elastomer in the resin composition being 5 mass% to 40 mass% based on the resin composition, a content of the polypropylene in the resin composition being at least 60 mass% based on the resin composition;
(b) cooling the gel solution to obtain a gel sheet;
(c) subjecting the gel sheet to biaxial stretching, so that an areal stretch ratio in a MD and a TD is 10 to 35 to obtain a biaxially stretched gel film; and
(d) washing the gel film with a solvent, and drying the washed film to obtain the polyolefin-based porous membrane.

**Statement under Art. 19.1 PCT**

In Box V, "2. Citations and explanations" of the Written Opinion of the International Searching Authority, it is found that "(2) The invention as in claims 1-11, 13 and 17-21 of the present application is novel and involves an inventive step in relation to documents 1-7 cited in the ISR".
New claim 12 after the amendment recites the features of original claims 12 and 13.
Therefore, the invention as in new claim 12 is novel and involves an inventive step.
New claim 22 after the amendment recites the features of original claims 22 and 13.
Therefore, the invention as in new claim 22 is novel and involves an inventive step.

EP 4 506 397 A1

Fig. 1

35

Fig. 2

## INTERNATIONAL SEARCH REPORT

International application No.

**PCT/JP2024/007331**

### A. CLASSIFICATION OF SUBJECT MATTER

*C08J 5/22*(2006.01)i; *C08J 9/26*(2006.01)i; *C08L 23/02*(2006.01)i; *C08L 23/12*(2006.01)i; *C08L 23/14*(2006.01)i
FI: C08J5/22 101; C08J5/22 104; C08J5/22 105; C08J9/26 CES; C08L23/02; C08L23/12; C08L23/14

According to International Patent Classification (IPC) or to both national classification and IPC

### B. FIELDS SEARCHED

Minimum documentation searched (classification system followed by classification symbols)

B01J69/00; C08J5/00-5/02; C08J5/12-5/22; C08J9/00-9/42; ; C08L23/02; C08L23/12; C08L23/14: C25B13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-184671 A (KEE KK) 22 September 2011 (2011-09-22) | 12, 14-16, 22, 24-26 |
| | claims, paragraphs [0002], [0006], [0039], [0042], [0047], example 1 | |
| Y | | 23 |
| A | | 1-11, 13, 17-21 |
| Y | JP 2016-23308 A (KEE KK) 08 February 2016 (2016-02-08) | 23 |
| | claims 1, 8, paragraph [0021] | |
| A | | 1-22, 24-26 |
| A | JP 2018-24718 A (INOAC CORP.) 15 February 2018 (2018-02-15) | 1-26 |
| | entire text | |
| A | JP 2012-21099 A (ASTOM KK) 02 February 2012 (2012-02-02) | 1-26 |
| | entire text | |
| A | JP 62-247093 A (ASAHI GLASS CO., LTD.) 28 October 1987 (1987-10-28) | 1-26 |
| | entire text | |

☑ Further documents are listed in the continuation of Box C.    ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 May 2024** | **28 May 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

International application No.

**PCT/JP2024/007331**

**C. DOCUMENTS CONSIDERED TO BE RELEVANT**

| Category* | Citation of document, with indication, where appropriate, of the relevant passages | Relevant to claim No. |
|---|---|---|
| A | JP 2020-164861 A (TORAY INDUSTRIES, INC.) 08 October 2020 (2020-10-08) entire text | 1-26 |
| A | JP 2018-183997 A (ASTOM KK) 22 November 2018 (2018-11-22) entire text | 1-26 |

Form PCT/ISA/210 (second sheet) (July 2022)

INTERNATIONAL SEARCH REPORT
Information on patent family members

International application No.

**PCT/JP2024/007331**

| Patent document cited in search report | | | Publication date (day/month/year) | Patent family member(s) | Publication date (day/month/year) |
|---|---|---|---|---|---|
| JP | 2011-184671 | A | 22 September 2011 | (Family: none) | |
| JP | 2016-23308 | A | 08 February 2016 | (Family: none) | |
| JP | 2018-24718 | A | 15 February 2018 | (Family: none) | |
| JP | 2012-21099 | A | 02 February 2012 | (Family: none) | |
| JP | 62-247093 | A | 28 October 1987 | (Family: none) | |
| JP | 2020-164861 | A | 08 October 2020 | EP 3950795 A1 entire text CN 113631644 A KR 10-2021-0148119 A WO 2020/203901 A1 | |
| JP | 2018-183997 | A | 22 November 2018 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009215500 A
- JP 2010215901 A
- WO 2016104792 A
- JP 7020654 B
- JP H06104736 B
- JP 3347835 B

**Non-patent literature cited in the description**

- **L. E. NIELSEN**. Mechanical Properties of Polymers. Kagaku-Dojin Publishing Company, Inc., 1965, 98-100